(19) Europäisches Patentamt / European Patent Office / Office européen des brevets

(11) **EP 3 916 495 B1**

(12) **EUROPÄISCHE PATENTSCHRIFT**

(45) Veröffentlichungstag und Bekanntmachung des Hinweises auf die Patenterteilung:
**22.07.2026 Patentblatt 2026/30**

(51) Internationale Patentklassifikation (IPC):
**G05B 13/04** (2006.01)   **G05B 19/418** (2006.01)

(21) Anmeldenummer: **20177245.6**

(22) Anmeldetag: **28.05.2020**

(52) Gemeinsame Patentklassifikation (CPC):
**G05B 13/04; G05B 19/41875;** G05B 2219/32077;
G05B 2219/32194; G05B 2219/32201; Y02P 90/02

(54) **VERFAHREN UND ANORDNUNG ZUM AUSWERTEN ODER ZUM VORBEREITEN EINER AUSWERTUNG EINER STICHPROBE VON MESSDATEN AUS EINER VERMESSUNG EINER VIELZAHL VON WERKSTÜCKEN**

METHOD AND ARRANGEMENT FOR EVALUATING OR PREPARING AN EVALUATION OF A SAMPLE OF MEASUREMENT DATA FROM A MEASUREMENT OF A PLURALITY OF WORKPIECES

PROCÉDÉ ET AGENCEMENT D'ÉVALUATION OU DE PRÉPARATION D'UNE ÉVALUATION D'UN ÉCHANTILLON ALÉATOIRE DE DONNÉES MESURÉES À PARTIR D'UNE MESURE D'UNE PLURALITÉ DE PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.12.2021 Patentblatt 2021/48**

(73) Patentinhaber: **Carl Zeiss Industrielle Messtechnik GmbH**
**73447 Oberkochen (DE)**

(72) Erfinder:
- **Rüger, Oliver**
  **01217 Dresden (DE)**
- **Lukawska, Miroslawa**
  **2920 Charlottenlund (DK)**
- **Görsch, Daniel**
  **01277 Dresden (DE)**

(74) Vertreter: **Brunotte, Joachim Wilhelm Eberhard**
**Patentanwälte Bressel und Partner mbB**
**Potsdamer Platz 10**
**10785 Berlin (DE)**

(56) Entgegenhaltungen:
WO-A1-99/42811   CN-A- 107 220 216
DE-A1- 102016 005 949   US-A1- 2016 225 389

- T. SEGRETO ET AL: "Feature Extraction and Pattern Recognition in Acoustic Emission Monitoring of Robot Assisted Polishing", PROCEDIA CIRP, vol. 28, 1 December 2015 (2015-12-01), NL, pages 22 - 27, XP055749501, ISSN: 2212-8271, DOI: 10.1016/j.procir.2015.04.005
- CHRISTIAN REINBOTH: "Grundlagen der Statistik: Schiefe und Wölbung", 17 November 2016 (2016-11-17), pages 1 - 10, XP055749278, Retrieved from the Internet <URL:https://wissenschafts-thurm.de/grundlagen-der-statistik-schiefe-und-woelbung/> [retrieved on 20201111]
- LOTHAR: "Berechnungsgrundlagen zur Fehlerstatistik in der KernstrahlungsmeÃ technik, Teil VI", (ATM) ARCHIV FÃ1?4R TECHNISCHES MESSEN,, vol. 21, no. 383, 1 December 1967 (1967-12-01), pages 267 - 272, XP001428439
- CHRISTIAN REINBOTH: "Grundlagen der Statistik: Schiefe und Wölbung", 17 November 2016 (2016-11-17), pages 1 - 10, XP055749278, Retrieved from the Internet <URL:https://wissenschafts-thurm.de/grundlagen-der-statistik-schiefe-und-woelbung/> [retrieved on 20201111]

- ANONYMOUS: "Pearson distribution - Wikipedia", 20 January 2020 (2020-01-20), pages 1 - 12, XP055888197, Retrieved from the Internet <URL:https://web.archive.org/web/20200120071758/https://en.wikipedia.org/wiki/Pearson_distribution> [retrieved on 20220207]

- DANIEL LOIS: "Deskriptive Statistik", 1 April 2015 (2015-04-01), pages 1 - 57, XP055749248, Retrieved from the Internet <URL:https://www.unibw.de/hum-bildungswissenschaft/professuren/swm/methodenskripte/deskriptive-statistik.pdf> [retrieved on 20201111]

**Beschreibung**

Die Erfindung betrifft ein auf einem Computer oder Computernetzwerk durch ein Computerprogramm ausgeführtes Verfahren und eine Anordnung zum Auswerten einer Stichprobe von Messdaten aus einer Vermessung einer Vielzahl von Werkstücken durch ein oder mehrere Koordinatenmessgeräte.

Aus dem Bereich der Qualitätskontrolle von Prozessen zur Herstellung und/oder Bearbeitung von Werkstücken und Anordnungen von Werkstücken ist das Konzept der statistischen Prozesskontrolle bekannt. Durch eine statistische Modellierung eines Prozesses wird eine statistische Verteilung erhalten, anhand der insbesondere Aussagen über die Häufigkeit von bestimmten, aus dem Prozess generierten Messwerten getroffen werden kann. Z.B. kann gemäß den Patentansprüchen das Ergebnis der statistischen Modellierung sein, dass der Prozess beherrschbar ist. Insbesondere dann, wenn die Streubreite der Messwerte gering ist, kann als Ergebnis der statistischen Modellierung auch oder alternativ festgestellt werden, dass seine Qualität den Vorgaben entspricht.

Üblicherweise erfolgt die Erstellung eines solchen statistischen Modells, indem Informationen sowohl aus der Kenntnis des Prozesses als auch aus der Auswertung erhaltener Messdaten genutzt werden. Beispielsweise ist bekannt, dass bei der Vermessung eines Radius des Werkstücks der Prozess durch eine Normalverteilung beschreibbar ist. In diesem Fall streuen die Messwerte aus einer Vermessung einer Vielzahl von Werkstücken gleicher Art zufällig um einen Erwartungswert. Die Normalverteilung ermöglicht es, Parameter wie insbesondere die Streubreite aus ihr zu ermitteln.

Nicht die Ergebnisse jedes Prozesses sind durch eine Normalverteilung sinnvoll beschreibbar. Vielmehr gibt es andere statistische Verteilungen, die die Häufigkeit der Messwerte einer Messgröße in Abhängigkeit von dem Messwert beschreiben. Anders als eine Normalverteilung können die Verteilungen insbesondere lediglich zur statistischen Beschreibung von Messwerten innerhalb eines einseitig oder beidseitig beschränkten Werteintervalls geeignet sein. Eine solche Verteilung weist Werten außerhalb des Werteintervalls keine Häufigkeit zu und/oder die Häufigkeit und somit die Wahrscheinlichkeit für Werte außerhalb des Werteintervalls ist auf den Wert null festgelegt.

Beispielsweise ist das Pearson-Verteilungssystem ein System einer Mehrzahl bekannter und vielfach verwendeter statistischer Verteilungen. Wenn nun eine Stichprobe von Messdaten für einen Messwert vorliegt, kann eine der statistischen Verteilungen des Verteilungssystems ausgewählt und zur statistischen Modellierung verwendet werden. Dem liegt die Grundidee zugrunde, dass eine Verteilung ausschließlich aus Informationen der vorhandenen Daten erstellt wird. Zur Erstellung der statistischen Verteilung können verschiedene Vorgehensweisen gewählt werden. Insbesondere kann nach dem Prinzip der maximalen Wahrscheinlichkeit (englisch: maximum likelihood) vorgegangen werden, d. h. die Wahrscheinlichkeit, dass die Verteilung die Statistik der vorhandenen Daten korrekt beschreibt wird maximiert. Gemäß einer anderen Vorgehensweise können aus den Messdaten die sogenannten Momente der statistischen Verteilung ermittelt werden und dann eine zu diesen Momenten passende Verteilung ausgewählt werden. Bei der statistischen Modellierung mittels einer Verteilung auf Grundlage von Messdaten oder daraus abgeleiteter Daten kann es dazu kommen, dass die Verteilung die Häufigkeit der Messwerte oder der daraus abgeleiteten Werte über einen großen Teil des vorkommenden oder möglichen Werteintervalls gut beschreibt, jedoch Werte auch außerhalb des von der Verteilung beschreibbaren Werteintervalls liegen oder liegen können. In der Praxis hat dies den Nachteil, dass die statistische Verteilung nicht optimal modelliert wird und Anwender den unerwünschten Fall erleben können, dass vorkommende Messwerte nicht in das Werteintervall der Verteilung fallen und daher nicht zu der Verteilung beitragen bzw. durch die Verteilung vorhergesagt werden können. Es besteht in diesem Fall ein offensichtlicher Modellierungsfehler.

WO 99/42811 A1 beschreibt ein Verfahren zum Identifizieren der Korrosion eines Metallobjekts, umfassend die Schritte des Bereitstellens von Elektrodenmitteln, die elektrochemische Rauschsignale erzeugen können, und des Analysierens der statistischen Verteilung der Rauschsignale, um einen Hinweis auf Korrosionsparameter zu geben, wobei die Parameter das Ausmaß und / oder die Art der Korrosion beinhalten.

T. Segreto et al. "Feature Extraction and Pattern Recognition in Acoustic Emission Monitoring of Robot Assisted Polishing", PROCEDIA CIRP, Band 28, 1. Dezember 2015, Seiten 22-27, beschreibt die Verwendung von Sensoren, die ein akustisches Signal emittieren, für die Überwachung eines Prozesses des Polierens von Oberflächen. Es wird eine statistische Analyse der erhaltenen Signale durchgeführt.

US 2016/225389 A1 beschreibt ein Verfahren zum Erkennen eines abnormalen Geräusches, wobei ein Standardmustervektor erzeugt wird, mit einer Merkmalsmenge eines Standardtons als Komponente und eines ursprünglichen Eingangsmustervektors mit einer Merkmalsmenge eines Eingangsklangs als Komponente.

CN 107 220 216 A betrifft die Berechnung des Ersatzteilbedarfs und betrifft insbesondere ein ungefähres Berechnungsverfahren für den Ersatzteilbedarf vom Weibull-Typ unter Verwendung von Kennzahlen.

Keines der vier zuvor genannten Dokumente betrifft die Auswertung einer Stichprobe von Messdaten aus einer Vermessung einer Vielzahl von Werkstücken durch ein oder mehrere Koordinatenmessgeräte.

Es ist eine Aufgabe der vorliegenden Erfindung, ein Verfahren und eine Anordnung zum Auswerten einer Stichprobe von Messdaten aus einer Vermessung einer Vielzahl von Werkstücken durch ein oder mehrere Koordinatenmessgeräte anzugeben, mit denen Messdaten für die Qualitätskontrolle von Prozessen zur Herstellung und/oder Bearbeitung von Werkstücken und Anordnungen von Werkstücken bei hoher Qualität statistisch modellierbar sind.

Die beigefügten Patentansprüche definieren den Schutzumfang. Patentanspruch 1 definiert ein auf einem Computer oder Computernetzwerk durch ein Computerprogramm ausgeführtes Verfahren. Patentanspruch 8 definiert eine Anordnung. Patentanspruch 15 definiert ein Computerprogramm zur Ausführung des Verfahrens.

Die Lösung beruht auf dem Grundgedanken, dass für eine erste statistische Verteilung oder für eine Gruppe erster statistischer Verteilungen, mit der eine Stichprobe von Messdaten statistisch beschreibbar ist/sind, geprüft wird, ob diese geeignet ist/sind, die Häufigkeit von Messdaten-Werten als Funktion der Messdaten-Werte innerhalb eines vorgegebenen Werteintervalls oder innerhalb eines Werteintervalls der tatsächlich in der Stichprobe vorkommenden Messdaten zu beschreiben.

Um die Prüfung durchzuführen, findet eine erste Auswertung der Stichprobe der Messdaten statt. Ferner dient das Ergebnis der Prüfung unmittelbar der Auswertung der Stichprobe von Messdaten, denn eine statistische Verteilung, die nicht dazu geeignet ist, die Stichprobe in dem gesamten Werteintervall zu modellieren, kann als solche Verteilung erkannt werden. Dies ermöglicht es insbesondere, eine besser geeignete statistische Verteilung zu ermitteln.

Weitere Schritte der Auswertung der Stichprobe, nämlich insbesondere die Ermittlung von Parametern der für die statistische Modellierung der Stichprobe geeigneten Verteilung können weitere Bestandteile des Verfahrens zum Auswerten der Stichprobe sein. Die geeignete statistische Verteilung stellt ein mögliches Ergebnis der Auswertung der Stichprobe dar. Die Feststellung, dass die erste statistische Verteilung nicht zur statistischen Modellierung der Stichprobe über den gesamten vorgegebenen oder tatsächlich vorkommenden Werteintervall der Messdaten geeignet ist, stellt ein anderes mögliches Ergebnis der Auswertung der Stichprobe dar.

Bei den Messdaten handelt es sich um Messdaten, die mittels der Vermessung der Werkstücke durch ein oder mehrere Koordinatenmessgeräte erhalten werden. Die Art der Koordinatenmessgeräte ist nicht auf eine bestimmte Art beschränkt. Solange die Messwerte vergleichbar sind, können auch verschiedene Koordinatenmessgeräte und/oder Koordinatenmessgeräte verschiedenen Typs zur Erzeugung der in der Stichprobe enthaltenen Messdaten verwendet werden. Beispiele für Typen von Koordinatenmessgeräten sind Koordinatenmessgeräte in Portal- oder Gantrybauweise, Koordinatenmessgeräte mit einem Gelenkarm, Roboter oder Werkzeugmaschinen mit zumindest einem Messsensor und Einrichtungen mit einem insbesondere optischen oder einem andersartigen Messsensor, wobei der Messsensor im Messraum fest positioniert ist. Z.B. kann auch ein komplexes Werkstück mittels einer Anordnung von Kameras derart vermessen werden, dass ein Verlauf der Oberfläche des Werkstücks in einem Koordinatensystem des Werkstücks oder des Messraums ermittelt wird. Daraus wiederum können insbesondere Positionen von Oberflächenpunkten oder Oberflächenbereichen des Werkstücks ermittelt werden.

Es sind unterschiedliche Arten von Messsensoren geeignet zur Erzeugung der Messdaten. Z.B. werden insbesondere an klassischen Koordinatenmessgeräten taktile Sensoren und/oder optische Sensoren verwendet. Berührungslos messende Sensoren sind z.B. Abstandssensoren und/oder bildgebende Sensoren wie Kameras. Abstandssensoren können nach unterschiedlichen Messprinzipien funktionieren, wie beispielsweise kapazitive Sensoren, induktive Sensoren, Laufzeitsensoren wie TOF-Kameras (Time of Flight Kameras) und/oder chromatisch-konfokale Sensoren. Ferner kann zumindest ein Sensor des Koordinatenmessgeräts mittels einer Antriebsvorrichtung bewegt werden und kann die aus einem Maßstabssystem des Koordinatenmessgeräts ermittelte Position des Messsensors in die Bestimmung der Werkstückkoordinaten eingehen.

Die zuvor beschriebenen Koordinatenmessgeräte und Messsensoren sind lediglich Beispiele. Allgemein können die Messdaten von Werkstücken auf beliebige Art durch ein oder mehrere Koordinatenmessgeräte erzeugt werden. Bei den Messdaten handelt es sich insbesondere um Koordinaten zumindest eines Teils der Werkstückoberfläche und/oder des Werkstückinneren. Koordinaten z.B. von Hohlraumgrenzen oder von Übergängen unterschiedlicher Werkstoffe können beispielsweise mit invasiven Messverfahren wie der Durchstrahlung des Werkstücks aus unterschiedlichen Richtungen mittels Röntgenstrahlung oder anderer invasiver Strahlung und anschließender computergestützter Rekonstruktion (z.B. CT-Verfahren) ermittelt werden. Insbesondere können die Messdaten auch aus zumindest einer Koordinate und z.B. aus mehreren Koordinaten des jeweiligen Werkstücks abgeleitete Messdaten wie Radien, Längen, Rundheit und Krümmung sein. Solche abgeleiteten Daten, die insbesondere mehreren Koordinaten des jeweiligen Werkstücks entsprechen, können auch mittels spezieller Messgeräte ohne die explizite Bestimmung der Koordinaten direkt bestimmt werden. Beispielsweise ermöglichen es Kamerabilder, die Rundheit oder den Durchmesser eines zylindrischen Bereichs eines Werkstücks zu bestimmen. Auch sind Messgeräte mit taktilen Sensoren bekannt, die solche abgeleiteten Messgrößen direkt bestimmen.

Ferner können die Messdaten aus den von dem jeweiligen Messgerät oder der Messanordnung erzeugten Rohdaten abgeleitete Messdaten sein oder diese enthalten. So können z.B. die aus der Vermessung einer Mehrzahl gleichartiger Werkstücke erhaltenen Rohdaten zu einem Mittelwert zusammengefasst werden und/oder können aus den Rohdaten Ausreißer, d.h. unsinnige oder unplausible Werte, eliminiert oder korrigiert werden.

Bei der Vielzahl von Werkstücken, deren Vermessung die Grundlage für die Messdaten bildet, kann es sich insbesondere um einfache oder komplexe, wiederum aus mehreren Werkstücken zusammengesetzte Werkstücke handeln. Es ist lediglich erforderlich, dass bei der Auswertung vergleichbare Messwerte oder daraus abgeleitete Werte vorliegen. Unter einem Werkstück wird daher sowohl ein einfaches Bauteil wie eine Schraube oder ein Stift als auch ein zusammengesetztes Werkstück oder unregelmäßig geformtes Werkstück wie eine Tür eines Kraftfahrzeugs als auch eine Maschine oder andere Anordnung von Werkstücken verstanden.

Unter einer Stichprobe von Messdaten wird jede Auswahl und/oder jedes Verarbeitungsergebnis aus vorliegenden Messdaten der oben genannten Art und/oder werden die kompletten Messdaten verstanden. Die Messdaten bilden Grundlage für die statistische Beschreibung bzw. Modellierung.

Wie erwähnt ist es möglich und wird im Rahmen der Erfindung vorgeschlagen, für die Stichprobe zu prüfen, ob eine erste statistische Verteilung zur statistischen Beschreibung geeignet ist. Insbesondere kann die erste statistische Verteilung ausschließlich auf Grundlage der Stichprobe erstellt werden. Für die Prüfung reicht es aber aus, lediglich bestimmte Eigenschaften der ersten statistischen Verteilung zu ermitteln. Wie noch näher beschrieben wird, ist es für die erste statistische Verteilung lediglich erforderlich, dass gewisse Momente der Verteilung ermittelbar sind. Optional kann eine Vorauswahl eines Verteilungstyps wie z.B. einer Verteilung aus dem Pearson-Verteilungssystem stattfinden. Die erste statistische Verteilung kann jedoch auch eine Verteilung sein, die nicht Teil des Systems von statistischen Verteilungen ist, welches als Grundlage für eine gegebenenfalls ermittelte zweite statistische Verteilung dient.

Bei dem Begriff der Momente einer statistischen Verteilung handelt es sich um einen statistischen Fachbegriff. Üblicherweise gehören zu den Momenten der Erwartungswert, die Varianz sowie die Schiefe und die Kurtosis. Diese Momente und optional vorhandene Momente höherer Ordnung können als Kenngrößen für die jeweilige statistische Verteilung verwendet werden.

Es wird nun vorgeschlagen, für das bereits erwähnte Werteintervall der Messdaten, das ein vorgegebenes Werteintervall oder ein Werteintervall der tatsächlich in der Stichprobe vorkommenden Messdaten ist, aus einem System von statistischen Verteilung eine Menge aller derjenigen statistischen Verteilungen zu definieren, welche dazu in der Lage sind, eine Häufigkeit von Messdaten-Werten in dem gesamten Werteintervall zu beschreiben. Dabei wird es nicht als eine Beschreibung der Häufigkeit verstanden, wenn die Häufigkeit bzw. Wahrscheinlichkeit für einen Messdaten-Wert generell, bei jeder Ausprägung der statistischen Verteilung null ist oder undefiniert ist. Tatsächliche oder mögliche Vorkommen dieses Messdaten-Wertes würden mittels eines Wahrscheinlichkeitswertes bzw. Häufigkeitswert null nicht adäquat beschrieben. Auf zumindest ein Ausführungsbeispiel, wie die Menge der zur Beschreibung der Häufigkeit in dem gesamten Werteintervall geeigneten statistischen Verteilungen ermittelt bzw. definiert werden kann, wird später eingegangen. Diese Definition der Menge der geeigneten statistischen Verteilungen kann jeweils dann stattfinden, wenn auch eine erste statistische Verteilung für eine Stichprobe erzeugt wird und/oder die erste statistische Verteilung auf zur Vorbereitung der Prüfung ihrer Eignung charakterisiert wird. Solange jedoch das Werteintervall der Messdaten für verschiedene Stichproben gleich ist, reicht es aus, die Menge einmalig zu definieren, denn die Menge hängt lediglich von dem Werteintervall und nicht von der Häufigkeit bzw. Wahrscheinlichkeit der Messdaten-Werte der Stichprobe ab. Insbesondere kann die Definition der Menge geeigneter statistischer Verteilungen vor, gleichzeitig und/oder nach der Erzeugung oder Charakterisierung der ersten statistischen Verteilung für die Stichprobe stattfinden.

Insbesondere kann bei der Definition der Menge aller derjenigen statistischen Verteilungen, welche dazu in der Lage sind, eine Häufigkeit von Messdaten-Werten in dem gesamten Werteintervall zu beschreiben, aus dem Werteintervall eine Grenze der Menge ermittelt werden. Aus der Grenze kann eindeutig die Menge ermittelt werden.

Es wurde bereits erwähnt, dass die erste statistische Verteilung zwar nicht zwingend zu dem System von statistischen Verteilungen gehören muss, obwohl sie bei einer Ausgestaltung dazugehören kann. Es ist jedoch erforderlich, dass jeweils ein Momenten-Wert der Schiefe und der Kurtosis entsprechend der ersten statistischen Verteilung ermittelbar ist, um sie bzw. eine Gruppe erster statistischer Verteilungen mit demselben Wert der Schiefe und demselben Wert der Kurtosis zu charakterisieren.

Um prüfen zu können, ob in der Menge geeigneter statistischer Verteilungen eine für die Stichprobe von Messdaten geeignete Verteilung enthalten ist, wird nun jeweils ein Momenten-Wert der Schiefe und der Kurtosis entsprechend der ersten statistischen Verteilung ermittelt.

Es gibt verschiedene Möglichkeiten, wie ein Momenten-Wert der Schiefe und der Kurtosis entsprechend der ersten statistischen Verteilung ermittelt wird. Zum einen können zunächst Werte der Schiefe und der Kurtosis aus einer Stichprobe von Messdaten unmittelbar ermittelt werden. Optional kann dann eine entsprechende erste statistische Verteilung näher spezifiziert werden, beispielsweise durch Angabe der entsprechenden Verteilungsdichtefunktion, die dieselben Werte der Schiefe und der Kurtosis als Kenngrößen aufweist. Insbesondere kann dabei nach der Methode der Definition der statistischen Verteilung entsprechend ihrer Momente vorgegangen werden.

Eine weitere Möglichkeit besteht darin, eine erste statistische Verteilung zu ermitteln, die die Messdaten der Stichprobe statistisch modelliert, zum Beispiel nach der Methode der Maximierung der Wahrscheinlichkeit, dass die erste statistische Verteilung die Messdaten der Stichprobe korrekt modelliert. Dann können die Werte der Schiefe und der Kurtosis der ersten statistischen Verteilung ermittelt werden.

Wenn die erste statistische Verteilung nicht zu dem System von statistischen Verteilungen gehört, dann kann jedoch innerhalb des Systems eine statistische Verteilung gewählt werden oder existieren, welche dieselben Werte der Schiefe und der Kurtosis hat und welche die jeweiligen Messdaten in angemessener Weise statistisch modelliert. Zur Vereinfachung kann daher beispielsweise angenommen werden, dass diejenige statistische Verteilung innerhalb des Systems, die die aus der Stichprobe von Messdaten ermittelten Werte der Schiefe und der Kurtosis hat, die Messdaten in angemessener Weise statistisch modelliert. An dieser Stelle bedeutet "in angemessener Weise statistisch modelliert" noch nicht zwangsläufig, dass die Verteilung die Messdaten über das gesamte Werteintervall Messdaten modelliert. Dies wird erst noch geprüft.

Anhand der ermittelten Momenten-Werte der Schiefe und der Kurtosis wird nun geprüft, ob in der definierten Menge eine statistische Verteilung existiert, die die ermittelten Momenten-Werte der Schiefe und der Kurtosis aufweist. Es wird ein entsprechendes Prüfergebnis erzeugt und optional ausgegeben. Das Prüfergebnis kann insbesondere darin bestehen, dass innerhalb der definierten Menge eine statistische Verteilung mit den ermittelten Werten der Schiefe und der Kurtosis existiert. In diesem Fall kann die erste statistische Verteilung als geeignete statistische Verteilung für die Modellierung der Messdaten-Werte in dem gesamten Werteintervall verwendet werden, wenn sie zu dem System von Verteilungen gehört. Wenn die erste statistische Verteilung bis zur Durchführung der Prüfung noch nicht vollständig erzeugt worden ist, kann dies nun nachgeholt werden. Wenn die erste statistische Verteilung nicht zu dem System gehört oder wenn die Werte der Schiefe und der Kurtosis unmittelbar aus der Stichprobe von Messdaten ermittelt wurden, kann die in dem System enthaltene Verteilung mit den ermittelten Werten der Schiefe und der Kurtosis als geeignete statistische Verteilung für die Modellierung der Messdaten-Werte in dem gesamten Werteintervall verwendet werden.

Das Prüfergebnis kann aber auch darin bestehen, dass die ermittelten Momenten-Werte der Schiefe und der Kurtosis zu keiner statistischen Verteilung innerhalb der definierten Menge geeigneter Verteilungen gehören. In diesem Fall sagt das Prüfergebnis aus, dass die erste statistische Verteilung bzw. die Gruppe der ersten statistischen Verteilungen nicht geeignet ist. In diesem Fall ist es nicht erforderlich, die erste statistische Verteilung vollständig in allen für eine statistische Modellierung erforderlichen Details zu erzeugen. Insbesondere muss keine Funktionsgleichung der statistischen Verteilung angegeben werden, die die Häufigkeit bzw. Wahrscheinlichkeit des Vorkommens der Messdaten-Werte als Funktion der Messdaten-Werte beschreibt. Für diesen Fall wird bevorzugt, dass das Prüfergebnis ausgegeben wird und/oder die Ermittlung einer geeigneten, zweiten statistischen Verteilung auslöst.

Bei der Definition der Menge aller derjenigen statistischen Verteilungen, welche dazu in der Lage sind, eine Häufigkeit von Messdaten-Werten in dem gesamten Werteintervall zu beschreiben, können aus dem Werteintervall Wertepaare der Schiefe und der Kurtosis von statistischen Verteilungen des Systems ermittelt werden, die der Menge entsprechen. Es wird somit ein Zusammenhang zwischen dem Werteintervall und der Schiefe und der Kurtosis von statistischen Verteilungen des Systems hergestellt. Die mit der Information insbesondere über die Grenzen des Werteintervalls ermittelten Wertepaare bilden ebenfalls eine Menge. Im Folgenden soll jedoch aus Gründen der Eindeutigkeit der Begriff Menge lediglich in Bezug auf die geeigneten statistischen Verteilungen verwendet werden.

Insbesondere kann bei der Definition der Menge aller derjenigen statistischen Verteilungen, welche dazu in der Lage sind, eine Häufigkeit von Messdaten-Werten in dem gesamten Werteintervall zu beschreiben, aus dem Werteintervall eine Grenzkurve in einer von der Schiefe und der Kurtosis von statistischen Verteilungen des Systems aufgespannten Ebene ermittelt werden. Diese Ebene kann auch als Pearson Ebene bezeichnet werden, wenn das System der Verteilungen ein Pearson-Verteilungssystem ist. Die Wertepaare der Schiefe und der Kurtosis auf der Grenzkurve und auf einer Seite der Grenzkurve entsprechen dann der Menge geeigneter statistischer Verteilungen des Systems. Insbesondere dies ermöglicht es, auf einfache Weise anhand konkreter Werte der Schiefe und der Kurtosis festzustellen, ob eine statistische Verteilung dazu geeignet ist, Messdaten über das gesamte Werteintervall statistisch zu modellieren.

Bei dem System von statistischen Verteilungen handelt es sich um das Pearson Verteilungssystem, wobei es hinsichtlich der Anzahl der zum System gehörenden Verteilungen Varianten gibt. Beispielsweise gibt es eine Variante mit acht Typen von Verteilungen und gibt es Varianten mit mehr als acht, zum Beispiel zwölf, Typen von Verteilungen, wobei manche der zwölf Typen Untertypen der acht Typen sind.

Es wird bevorzugt, dass die Stichprobe und/oder die erste statistische Verteilung auf den Fall standardisiert wird/werden, dass der Erwartungswert null und die Varianz eins betragen. Bei einer gegebenen Stichprobe bzw. Verteilung ist dies möglich, indem die Messwerte bzw. die Verteilung auf den Erwartungswert null verschoben werden/wird und die Messwerte bzw. das Argument der Verteilungsdichtefunktion durch die Standardabweichung dividiert wird. Wenn dann zum Beispiel eine zur statistischen Modellierung über das gesamte Werteintervall der Stichprobe geeignete statistische Verteilung ermittelt worden ist, können die Messwerte bzw. das Argument der Verteilungsdichtefunktion mit der Standardabweichung multipliziert werden und die Verschiebung auf den Erwartungswert null durch Verschiebung in umgekehrte Richtung rückgängig gemacht werden. Im Ergebnis erhält man dann eine zur Modellierung geeignete statistische Verteilung mit dem korrekten Erwartungswert und der korrekten Varianz. Eine solche Standardisierung muss jedoch nicht vorgenommen werden. Insbesondere der Aufwand für die Definition der Menge aller derjenigen statistischen Verteilungen, welche dazu in der Lage sind, eine Häufigkeit von Messdaten-Werten in dem gesamten Werteintervall zu beschreiben, ist dann aber höher.

Ein Verfahren zum Auswerten einer Stichprobe von Messdaten aus einer Vermessung einer Vielzahl von Werkstücken gemäß Anspruch 1 weist u.a. die folgenden Merkmale und weitere Merkmale auf: Es existiert ein System von statistischen Verteilungen oder wird aufgestellt, welche dazu in der Lage sind, eine Häufigkeit von Messdaten-Werten als Funktion der Messdaten-Werte zu beschreiben, wobei Exemplare des Systems von statistischen Verteilungen durch jeweils einen Momenten-Wert von zwei Momenten, nämlich einer Schiefe und einer Kurtosis, der jeweiligen statistischen Verteilung voneinander unterscheidbar sind, und wobei

- für ein Werteintervall der Messdaten, das ein vorgegebenes Werteintervall oder ein Werteintervall der tatsächlich in der Stichprobe vorkommenden Messdaten ist, aus dem System von statistischen Verteilungen eine Menge aller derjenigen statistischen Verteilungen definiert wird, welche dazu in der Lage sind, eine Häufigkeit von Messdaten-Werten in dem gesamten Werteintervall zu beschreiben,
- aus der Stichprobe von Messdaten entsprechend einer ersten statistischen Verteilung jeweils ein Momenten-Wert der Schiefe und der Kurtosis ermittelt wird,
- anhand der ermittelten Momenten-Werte geprüft wird, ob in der definierten Menge eine statistische Verteilung existiert, die die ermittelten Momenten-Werte der Schiefe und der Kurtosis aufweist, und ein entsprechendes Prüfergebnis erzeugt wird.

Gemäß Anspruch 3 weist eine Anordnung zum Auswerten einer Stichprobe von Messdaten aus einer Vermessung einer Vielzahl von Werkstücken u.a. folgende Merkmale und weitere Merkmale auf: Es existiert ein System von statistischen Verteilungen oder wird aufgestellt, welche dazu in der Lage sind, eine Häufigkeit von Messdaten-Werten als Funktion der Messdaten-Werte zu beschreiben, wobei Exemplare des Systems von statistischen Verteilungen durch jeweils einen Momenten-Wert von zwei Momenten, nämlich einer Schiefe und einer Kurtosis, der jeweiligen statistischen Verteilung voneinander unterscheidbar sind, und wobei die Anordnung aufweist:

- eine Definitionseinrichtung, die ausgestaltet ist, für ein Werteintervall der Messdaten, das ein vorgegebenes Werteintervall oder ein Werteintervall der tatsächlich in der Stichprobe vorkommenden Messdaten ist, aus dem System von statistischen Verteilungen eine Menge aller derjenigen statistischen Verteilungen zu definieren, welche dazu in der Lage sind, eine Häufigkeit von Messdaten-Werten in dem gesamten Werteintervall zu beschreiben,
- eine Momenten-Ermittlungseinrichtung, die ausgestaltet ist, aus der Stichprobe von Messdaten entsprechend einer ersten statistischen Verteilung jeweils einen Momenten-Wert der Schiefe und der Kurtosis zu ermitteln,
- eine Prüfeinrichtung, die ausgestaltet ist, anhand der ermittelten Momenten-Werte zu prüfen, ob in der definierten Menge eine statistische Verteilung existiert, die die ermittelten Momenten-Werte der Schiefe und der Kurtosis aufweist, und ein entsprechendes Prüfergebnis zu erzeugen.

Auch wenn allgemeiner als durch die Ansprüche definiert, soll hier ein Verfahren zum Vorbereiten einer Auswertung einer Stichprobe von Messdaten aus einer Vermessung einer Vielzahl von Werkstücken erwähnt werden, wobei ein System von statistischen Verteilungen existiert oder aufgestellt wird, welche dazu in der Lage sind, eine Häufigkeit von Messdaten-Werten als Funktion der Messdaten-Werte zu beschreiben, wobei Exemplare des Systems von statistischen Verteilungen durch jeweils einen Momenten-Wert von zwei Momenten, nämlich einer Schiefe und einer Kurtosis, der jeweiligen statistischen Verteilung voneinander unterscheidbar sind, und wobei

- für ein Werteintervall von Messdaten, das ein vorgegebenes Werteintervall oder ein Werteintervall einer auszuwertenden Stichprobe von Messdaten ist, aus dem System von statistischen Verteilungen eine Menge aller derjenigen statistischen Verteilungen definiert wird, welche dazu in der Lage sind, eine Häufigkeit von Messdaten-Werten in dem gesamten Werteintervall zu beschreiben,
- aus der Menge eine statistische Verteilung ermittelt wird.

Ausgestaltungen der Anordnung entsprechen Ausgestaltungen des Verfahrens, sodass insbesondere den im Folgenden beschriebenen Ausgestaltungen des Verfahrens jeweils auch eine Ausgestaltung der Anordnung entspricht.
Gemäß den Ansprüchen wird die so ermittelte statistische Verteilung in einem weiteren Schritt des Verfahrens bzw. beim Betrieb der Anordnung zur statistischen Modellierung der Messdaten einer Stichprobe verwendet. Bei der Vorbereitung der Auswertung muss jedoch noch keine Stichprobe von Messdaten vorhanden sein und müssen auch noch keine Messdaten vorhanden sein. Das Werteintervall kann zum Beispiel ohne jeden Bezug zu konkreten Messdaten vorgegeben sein. Alternativ kann das Werteintervall für konkrete, aber noch nicht vorhandene Messdaten definiert sein. Selbstverständlich betreffen das Verfahren der Vorbereitung der Auswertung und die Anordnung zur Vorbereitung der Auswertung aber auch den Fall, dass bereits konkrete Messdaten und gegebenenfalls auch die auszuwertende Stichprobe vorhanden sind.
Die Vorbereitung der Auswertung beruht auf demselben Gedanken wie die oben beschriebene Auswertung der Messdaten mit einer Prüfung, ob eine erste statistische Verteilung zur Modellierung einer Stichprobe von Messdaten über das gesamte Werteintervall geeignet ist. Dieser Gedanke besteht darin, dass für das Werteintervall von Messdaten aus dem System von statistischen Verteilungen eine Menge aller derjenigen statistischen Verteilungen definiert wird, welche dazu in der Lage sind, eine Häufigkeit von Messdaten-Werten in dem gesamten Werteintervall zu beschreiben.

Vorzugsweise wird gemäß einer vorgegebenen Vorschrift aus der Menge eindeutig eine statistische Verteilung ermittelt, d.h. die statistische Verteilung ergibt sich eindeutig aus der vorgegebenen Vorschrift.

Insbesondere lautet die vorgegebene Vorschrift lediglich, diejenige statistische Verteilung aus dem System von Verteilungen zu ermitteln, welche genau für das vorgegebene Werteintervall definiert ist, d.h. bezogen auf die in der Figurenbeschreibung verwendeten Begriffe ist der Support der Verteilung gleich dem Range der Stichprobe von Messdaten. Abhängig von den Grenzen des Werteintervalls gibt es jedoch Fälle, in denen eine solche eindeutige Ermittlung nicht möglich ist. Wenn jedoch die Grenzen des Werteintervalls zwei Bedingungen erfüllen, ist eine solche eindeutige Ermittlung einer statistischen Verteilung möglich. Die erste Bedingung lautet, dass die linke Grenze des Werteintervalls bei einem kleineren Wert liegt als die rechte Grenze des Werteintervalls. Die zweite Bedingung lautet, dass die linke Grenze multipliziert mit der rechten Grenze kleiner ist als der Wert -1. Wenn die zweite Bedingung nicht erfüllt ist, liegt das Wertepaar der Schiefe und der Kurtosis des eindeutigen Ergebnisses der Vorschrift im "verbotenen Bereich", der in der Figurenbeschreibung noch genauer beschrieben wird. In diesem Fall ist das Ergebnis unzulässig.

Die Erfindung betrifft das Auswerten einer Stichprobe von Messdaten aus einer Vermessung einer Vielzahl von Werkstücken und optional auch die Vorbereitung der Auswertung. Auch wenn dies nicht in den Schutzbereich der beigefügten Ansprüche fällt, kann die Erfindung auch auf die Auswertung einer Stichprobe von Messdaten aus einer Vermessung anderer Messobjekte angewandt werden. Dies gilt sowohl für das Verfahren als auch für die Anordnung und das Computerprogramm. Es gilt auch für alle in dieser Beschreibung beschriebenen Ausgestaltungen und Ausführungsbeispiele. Daher können zum Beispiel als Messobjekte auch Personen oder Tiere infrage kommen und betrifft die Auswertung und/oder deren Vorbereitung entsprechende Messdaten.

Zur Veranschaulichung der Verteilungen, für die eine Schiefe und eine Kurtosis als Momente der Verteilung bestimmbar sind, kann ein zweidimensionales Diagramm gezeichnet werden, bei dem in Richtung einer ersten Achse (z. B. x-Achse) Werte der Schiefe und entlang einer zweiten, zur ersten Achse quer und insbesondere senkrecht verlaufenden Achse (z. B. y-Achse) Werte der Kurtosis auftragbar sind. Jeder Punkt der so definierten Ebene von Wertepaaren entspricht einer Gruppe von Verteilungen, wobei die weiteren Momente dieser Gruppe von Verteilungen wie insbesondere der Erwartungswert und die Varianz für die Mitglieder der Gruppe verschieden sind. Wenn daher eine Gruppe von Verteilungen ausgewählt wird, die einem konkreten Wertepaar aus einem konkreten Wert der Schiefe und einem konkreten Wert der Kurtosis entspricht, dann kann innerhalb dieser Gruppe eine Verteilung ermittelt werden, die einer konkreten Stichprobe am besten entspricht, insbesondere hinsichtlich des Erwartungswerts und der Varianz. In der Ebene des zweidimensionalen Diagramms hat die definierte Menge insbesondere eine Grenzlinie zu Wertepaaren von Verteilungen, die nicht zu der definierten Menge geeigneter Verteilungen gehören, wobei die definierte Menge an der Grenzlinie auf der Seite größerer Werte der Kurtosis liegt.

Gemäß den Ansprüchen wird für die Stichprobe eine zweite statistische Verteilung ermittelt, wenn aus dem Prüfergebnis folgt, dass in der definierten Menge keine statistische Verteilung existiert, die die ermittelten Momenten-Werte der Schiefe und der Kurtosis aufweist, wobei die zweite statistische Verteilung eine in der definierten Menge enthaltene statistische Verteilung ist. Bei einer entsprechenden Ausgestaltung der Anordnung weist diese eine Einrichtung zur Ermittlung der zweiten statistischen Verteilung auf. Die zweite statistische Verteilung ist somit geeignet, die Häufigkeit bzw. Wahrscheinlichkeit der Messdaten-Werte über das gesamte vorgegebene Werteintervall bzw. das Werteintervall der Stichprobe zu beschreiben.

Insbesondere kann eine Vorschrift vorgegeben sein/werden, bei deren Befolgung für eine beliebige erste statistische Verteilung bzw. für die ermittelten Momenten-Werte der Schiefe und der Kurtosis eine in der definierten Menge enthaltene zweite statistische Verteilung ermittelt wird. Dabei ist es insbesondere möglich, eine Vorschrift vorzugeben, bei der die zweite statistische Verteilung auf eindeutige Weise ermittelbar ist, d. h. es folgt aus den ermittelten Momenten-Werte der Schiefe und der Kurtosis eindeutig eine zweite statistische Verteilung mit anderen Momenten-Werten der Schiefe und der Kurtosis. Eine solche Vorschrift kann beispielsweise lauten, dass die zweite statistische Verteilung denselben Schiefe-Wert aufweist und diejenige innerhalb der Menge enthaltene Verteilung ist, deren Kurtosis-Wert sich so gering wie möglich von dem ermittelten Kurtosis-Wert der ersten statistischen Verteilung unterscheidet. Bezogen auf das oben erwähnte zweidimensionale Diagramm bedeutet dies eine Verschiebung entlang der Kurtosis-Achse, bis der Bereich der definierten Menge erreicht ist. Es ist auch möglich, dass Vorschriften für verschiedene Fälle vorgegeben sind/werden und dass in manchen Fällen eine dieser Vorschriften nicht anwendbar ist und daher eine andere der vorgegebenen Vorschriften anzuwenden ist.

Eine Vorschrift hat den Vorteil, dass reproduzierbare Ergebnisse erhalten werden können und/oder die zweite statistische Verteilung automatisch ermittelt werden kann. Es ist jedoch auch möglich, es einem Nutzer zu überlassen, eine zweite statistische Verteilung innerhalb der definierten Menge auszuwählen.

Insbesondere ist/wird für jeweils zwei statistische Verteilungen, die dazu in der Lage sind, eine Häufigkeit von Messdaten-Werten als Funktion der Messdaten-Werte zu beschreiben, ein Abstandsmaß definiert. Das Abstandsmaß beschreibt einen Abstand der zwei statistischen Verteilungen. Bei einer Ausgestaltung des Verfahrens wird die zweite statistische Verteilung so ermittelt, dass der Wert des Abstandsmaßes der ersten statistischen Verteilung oder einer der ersten statistischen Verteilung in dem System von statistischen Verteilungen entsprechenden Verteilung zu der zweiten statistischen Verteilung ein Minimum des Abstandsmaßes des Abstandes der ersten statistischen Verteilung oder der der ersten statistischen Verteilung entsprechenden Verteilung zu den statistischen Verteilungen in der definierten Menge ist. Vereinfacht ausgedrückt ist die zweite statistische Verteilung diejenige Verteilung in der definierten Menge, die der ersten statistischen Verteilung oder der entsprechenden Verteilung am nächsten liegt. Wenn die erste statistische Verteilung nicht zu dem System von statistischen Verteilungen gehört, dann wird vorzugsweise der Abstand zu der entsprechenden Verteilung im System betrachtet. Beispielsweise hat die erste statistische Verteilung denselben Wert der Schiefe und der Kurtosis wie die entsprechende Verteilung im System. Insbesondere wenn die erste statistische Verteilung nicht Teil des Systems von Verteilungen ist, ist es aber auch möglich, deren Abstand unmittelbar zu einer zu dem System gehörenden Verteilung zu ermitteln und das Abstandsmaß dieses Abstandes zu minimieren, um die zu dem System gehörende zweite statistische Verteilung zu ermitteln.

Das Abstandsmaß kann in unterschiedlicher Weise definiert sein/werden. Eine Möglichkeit besteht darin, das Abstandsmaß bezogen auf den Abstand in der oben erwähnten zweidimensionalen Darstellung zu definieren, d. h. in der Ebene der Schiefe-Kurtosis- Wertepaare. In diesem Fall kann das Abstandsmaß zum Beispiel das Maß des euklidischen Abstandes in der Ebene der Wertepaare sein. Eine andere Möglichkeit besteht darin, das Abstandsmaß bezogen auf den Abstand der zwei zu vergleichenden Verteilungsdichtefunktionen bezüglich der funktionalen Abhängigkeit der Häufigkeit bzw. Wahrscheinlichkeit der Messdaten-Werte von den Messdaten-Werten zu definieren. Zum Beispiel kann daher das Abstandsmaß das Integral einer Potenz des Betrags der Differenz der Häufigkeiten (bzw. der Wahrscheinlichkeiten) über das Intervall der Vereinigungsmenge der Definitionsbereich der zwei statistischen Verteilungen oder über ein für die Integration vorgegebenes Werteintervall aufweisen. Der Exponent der Potenz kann zum Beispiel eins oder vorzugsweise zwei sein.

Das definierte Abstandsmaß ist ein Ausführungsbeispiel für die erwähnte vorgegebene Vorschrift, wobei die Vorschrift in diesem Fall außerdem enthält, dass die erste und die zweite statistische Verteilung den minimalen Abstand zueinander aufweisen oder höchstens einen vorgegebenen Maximalwert des Abstandsmaßes aufweisen.

Optional kann auch die Erzeugung der Messdaten der Stichprobe ein Schritt des erfindungsgemäßen Verfahrens sein. Gemäß den Ansprüchen ist die Auswertung der oben genannten zweiten statistischen Verteilung ein Schritt des erfindungsgemäßen Verfahrens. Dieser Auswertungsschritt beinhaltet, dass festgestellt wird, ob der Prozess, in dem die vermessenen Werkstücke (durch deren Vermessung die Messdaten gewonnen wurden) hergestellt und/oder bearbeitet worden sind, fähig ist und/oder ob ein vorgegebenes Qualitätskriterium erfüllt ist oder nicht erfüllt ist. Beispielsweise kann das Qualitätkriterium darin bestehen, dass zumindest eines der Momente der zweiten statistischen Verteilung eine vorgegebene Bedingung erfüllt. Zum Beispiel in Bezug auf die Streubreite der statistischen Verteilung (zweites Moment) kann vorgegeben sein, dass die Streubreite nicht größer als ein vorgegebener Wert ist.

Zumindest die Ermittlung der Momenten-Werte der Schiefe und der Kurtosis aus der Stichprobe von Messdaten entsprechend einer ersten statistischen Verteilung und die Prüfung anhand der ermittelten Momenten-Werte, ob in der definierten Menge eine statistische Verteilung existiert, die die ermittelten Momenten-Werte der Schiefe und der Kurtosis aufweist, und die Erzeugung eines entsprechenden Prüfergebnisses können durch Ausführung eines Computerprogramms auf einem Computer oder Computer-Netzwerk durchgeführt werden. Auch das Vorbereiten einer Auswertung einer Stichprobe von Messdaten aus einer Vermessung einer Vielzahl von Werkstücken, die Definition der Menge statistischer Verteilungen und/oder die Ermittlung einer statistischen Verteilung aus der Menge kann durch Ausführung eines Computerprogramms auf einem Computer oder Computer-Netzwerk durchgeführt werden.

Insbesondere weist das Computerprogramm Programmanweisungen auf, die bei Ausführung des Computerprogramms auf dem Computer oder auf dem Computer-Netzwerk den Computer oder das Computer Netzwerk veranlassen, das Verfahren in einer der in dieser Beschreibung beschriebenen Ausgestaltungen auszuführen. Insbesondere ist es daher bei Ausführung des Verfahrens zum Auswerten einer Stichprobe von Messdaten möglich, dass insbesondere die Momenten-Ermittlungseinrichtung und die Prüfeinrichtung der Anordnung durch einen Computer oder ein Computer-Netzwerk mit dem Computerprogramm realisiert werden. Auch die Verteilungs-Ermittlungseinrichtung kann auf diese Weise realisiert werden. Im Fall der Vorbereitung einer Auswertung einer Stichprobe von Messdaten ist es insbesondere möglich, dass die Definitionseinrichtung und/oder die Verteilung-Ermittlungseinrichtung durch einen Computer oder ein Computer-Netzwerk mit dem Computerprogramm realisiert wird/werden.

Ausführungsbeispiele und Hintergründe der Erfindung werden nun unter Bezugnahme auf die beigefügte Zeichnung beschrieben. Die einzelnen Figuren der Zeichnung zeigen:

Fig. 1    für eine Beispiel-Stichprobe von Messdaten eine Häufigkeitsverteilung der Messwerte und eine nicht zur Beschreibung der Häufigkeitsverteilung über das gesamte Werteintervall der Stichprobe geeignete statistische Verteilung,

Fig. 2    Beispiele für drei verschiedene statistische Verteilungen, die sich hinsichtlich ihrer Schiefe voneinander unterscheiden,

Fig. 3    Beispiele für zwei verschiedene statistische Verteilungen, die sich hinsichtlich ihrer Kurtosis voneinander unterscheiden,

Fig. 4    ein Beispiel für eine Ebene, deren Punkte durch Wertepaare der Schiefe und der Kurtosis definiert sind und die als Pearson Ebene bezeichnet wird, wobei die Figur Bereiche der Ebene aufweist, die jeweils den acht Typen eines Pearson Verteilungssystems mit acht Verteilungstypen zugeordnet sind, sowie den "verbotenen Bereich",

Fig. 5    eine vereinfachte Darstellung mit einem Ausschnitt des in Fig. 4 dargestellten Bereichs der Pearson Ebene, wobei zwei konkrete Punkte in der Pearson Ebene durch ein Kreuz gekennzeichnet sind,

Fig. 6    eine statistische Verteilung, deren Werte der Schiefe und der Kurtosis dem unteren mittigen, durch ein Kreuz gekennzeichneten Punkt in Fig. 5 entsprechen,

Fig. 7    eine statistische Verteilung, deren Werte der Schiefe und der Kurtosis dem oberen rechten, durch ein Kreuz gekennzeichneten Punkt in Fig. 5 entsprechen, wobei der Erwartungswert und die Varianz der in Fig. 6 und Fig. 7 dargestellten statistischen Verteilungen den gleichen Wert haben, die auch der Darstellung in Fig. 4 und Fig. 5 zugrunde liegen,

Fig. 8    für ein Ausführungsbeispiel einen Ausschnitt aus der Pearson Ebene, der für die Bedingung, dass die jeweilige statistische Verteilung bis zum linken Rand des Werteintervalls die Häufigkeit bzw. Wahrscheinlichkeit der Messdaten-Werte modellieren können soll, eine Lösungsmenge enthält,

Fig. 9    für das Ausführungsbeispiel der Fig. 8 einen Ausschnitt aus der Pearson Ebene, der für die Bedingung, dass die jeweilige statistische Verteilung bis zum rechten Rand des Werteintervalls die Häufigkeit bzw. Wahrscheinlichkeit der Messdaten-Werte modellieren können soll, eine Lösungsmenge enthält,

Fig. 10    für das Ausführungsbeispiel der Fig. 8 und Fig. 9 einen Ausschnitt aus der Pearson Ebene, der die Schnittmenge der Lösungsmengen aus Fig. 8 und Fig. 9 enthält,

Fig. 11    einen Ausschnitt aus der Pearson Ebene, der verschiedene Bereiche und ihre Grenzlinien zeigt, wobei entlang der horizontalen Achse die Schiefe und entlang der vertikalen Achse die Kurtosis variiert,

Fig. 12    einen Ausschnitt aus der Pearson Ebene mit Teilbereichen einer Lösungsmenge für den linken Support-Bereich, d.h. den Support-Bereich bezüglich der linken Grenze des Werteintervalls, für einen ersten Parameter-Wert,

Fig. 13    einen Ausschnitt aus der Pearson Ebene mit Teilbereichen einer Lösungsmenge für den linken Support-Bereich für einen zweiten Parameter-Wert,

Fig. 14    schematisch eine Anordnung von Einrichtungen zum Auswerten einer Stichprobe von Messdaten aus einer Vermessung einer Vielzahl von Werkstücken, die auch als Flussdiagramm interpretiert werden kann,

Fig. 15    einen Teilbereich des Ausschnitts aus der Pearson Ebene der Fig. 10, wobei der schraffierte Bereich in Fig. 15 dem kreuzweise schraffierten Bereich in Fig. 10 entspricht und wobei durch Kreuze zwei Punkte in der Ebene markiert sind, die einer ersten statistischen Verteilung außerhalb der Lösungsmenge und einer zweiten statistischen Verteilung am Rand der Lösungsmenge entsprechen, und

Fig. 16    für die Beispiel-Stichprobe und die Häufigkeitsverteilung der Messwerte aus Fig. 1 eine zur Beschreibung der Häufigkeitsverteilung über das gesamte Werteintervall der Stichprobe geeignete statistische Verteilung.

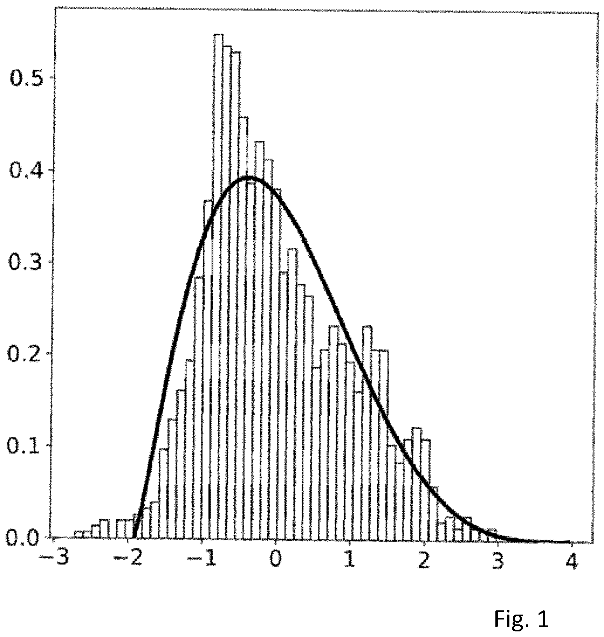

In Fig. 1 sind für jeweils kleine Teil-Intervalle des Werteintervalls von Messdaten-Werten einer Stichprobe von Messdaten die Häufigkeiten der Messdaten-Werte in Form von Balken dargestellt. Dem entsprechend sind an der horizontalen Achse die Messdaten-Werte aufgetragen und an der vertikalen Achse die Häufigkeiten bzw. Wahrscheinlichkeiten. Ferner ist in Fig. 1 die Funktionskurve einer ersten statistischen Verteilung dargestellt, die die Häufigkeitsverteilung modelliert. Es ist erkennbar, dass die erste statistische Verteilung Häufigkeiten lediglich in einem linksseitig beschränkten Werteintervall modelliert, wobei das Werteintervall bei ungefähr dem Messdaten-Wert -1,9 beginnt. Die Stichprobe enthält jedoch auch Messdaten-Werte die kleiner als -1,9 sind. Daher ist die erste statistische Verteilung nicht zur Modellierung der Häufigkeiten im gesamten Werteintervall der Stichprobe geeignet.

Beispielsweise kann für die Stichprobe, die der Fig. 1 zugrunde liegt, das Werteintervall der tatsächlich vorkommenden Messdaten-Werte oder ein größeres Werteintervall als dasjenige Werteintervall vorgegeben werden, in dem eine statistische Verteilung die Häufigkeit bzw. Wahrscheinlichkeit der Messdaten-Werte modellieren können soll. Dieses vorgegebene Werteintervall wird im Folgenden auch als Range bezeichnet.

Demgegenüber steht das Werteintervall, in dem eine statistische Verteilung die Häufigkeit bzw. Wahrscheinlichkeit der Messdaten-Werte modellieren kann. Dieses Werteintervall wird im Folgenden auch als Support der statistischen Verteilung bezeichnet. Bezogen auf den in Fig. 1 dargestellten Fall ist daher der Range nicht im Support enthalten. Dies wird aber angestrebt.

Insbesondere den statistischen Verteilungen des Pearson Verteilungssystems können wie oben bereits erwähnt Momente als Kenngrößen zugeordnet werden. Vier der Momente sind der Erwartungswert $v_1$, die Varianz $\mu_2$, die Schiefe $\tilde{\mu}_3$ und die Kurtosis $\tilde{\mu}_4$. Bezogen auf eine Zufallsvariable X ist das n-te Moment gegeben durch:

$$v_n(X) = E(X^n)$$

Durch Einsetzen von *n* = 1 ergibt sich der Erwartungswert. E bezeichnet den Erwartungswert-Operator. Das n-te zentrale Moment $\mu_n$ ist gegeben durch:

$$\mu_n(X) = E((X - v_1(X))^n), \quad n \geq 1$$

Hieraus kann durch Einsetzen von *n* = 2 die entsprechende Gleichung für die Varianz $\mu_2$ erhalten werden. Das n-te zentrale, standardisierte Moment $\tilde{\mu}_n$ ist gegeben durch:

$$\tilde{\mu}_n = \frac{\mu_n(X)}{\mu_2(X)^{n/2}}, \qquad n \geq 2$$

Hieraus können durch Einsetzen von *n* = 3 und 4 die entsprechenden Gleichungen für die die Schiefe $\tilde{\mu}_3$ und die Kurtosis $\tilde{\mu}_4$ erhalten werden. Wie an anderer Stelle noch begründet wird, sind die zentralen, standardisierten Momente der Schiefe und der Kurtosis unabhängig von den Momenten des Erwartungswert und der Varianz, sodass die Prüfung der Eignung einer statistischen Verteilung für die Modellierung einer Stichprobe im gesamten Werteintervall und die Ermittlung einer geeigneten statistischen Verteilung jeweils in Bezug auf die Schiefe und die Kurtosis für beliebige Erwartungswerte und beliebige Werte der Varianz vorgenommen werden können und die Ergebnisse der Prüfung bzw. Ermittlung gültig sind. Im Fall der an anderer Stelle beschriebenen Standardisierung ist darauf zu achten, dass die Lösungsmenge bezüglich der standardisierten Messwerte bzw. der standardisierten statistischen Verteilung ermittelt wird.

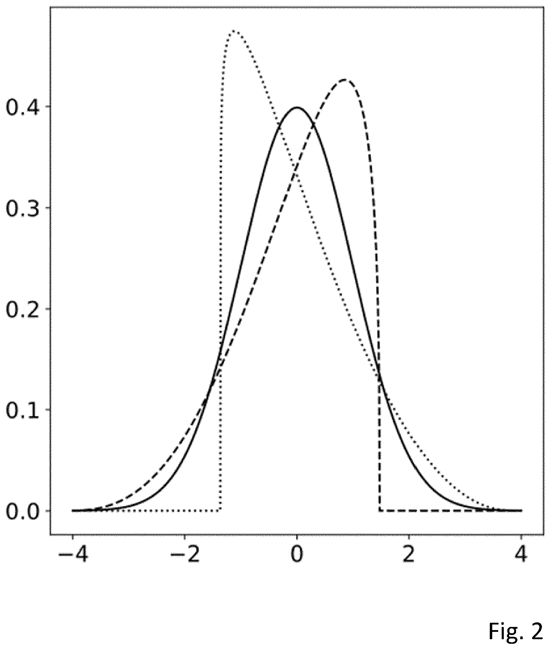

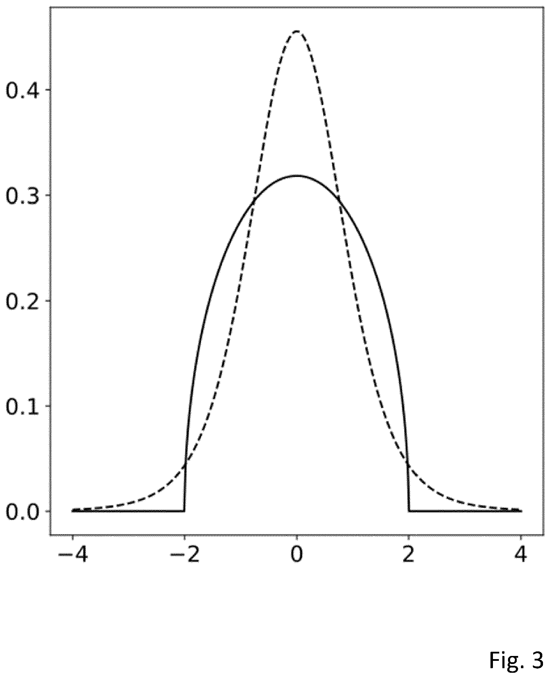

Fig. 2 zeigt drei verschiedene statistische Verteilungen, die sich hinsichtlich ihrer Schiefe voneinander unterscheiden. Dabei hat die Schiefe der durch eine ununterbrochene Linie dargestellten Verteilungsdichtefunktion den Wert null, da die Verteilungsdichtefunktion symmetrisch ist. Die durch eine gestrichelte Linie dargestellte Verteilungsdichtefunktion hat einen negativen Wert der Schiefe, die durch eine gepunktete Linien dargestellte Verteilungsdichtefunktion hat einen positiven Wert der Schiefe. Fig. 3 zeigt zwei verschiedene statistische Verteilungen, die sich hinsichtlich ihrer Kurtosis voneinander unterscheiden. Die Kurtosis nimmt lediglich positive Werte an. Die Kurtosis der Verteilungsdichtefunktion, welche durch eine gestrichelte Linie dargestellt ist, ist größer als die Kurtosis der Verteilungsdichtefunktion, welche durch eine ununterbrochene Linie dargestellt ist.

Es ist üblich, die ersten beiden Momente, den Erwartungswert und die Varianz, einer Verteilung anzupassen. Im Folgenden werden jedoch zunächst lediglich die Schiefe und Kurtosis betrachtet, mit denen jede Verteilung bzw. Gruppe von Verteilungen eindeutig identifiziert werden kann.

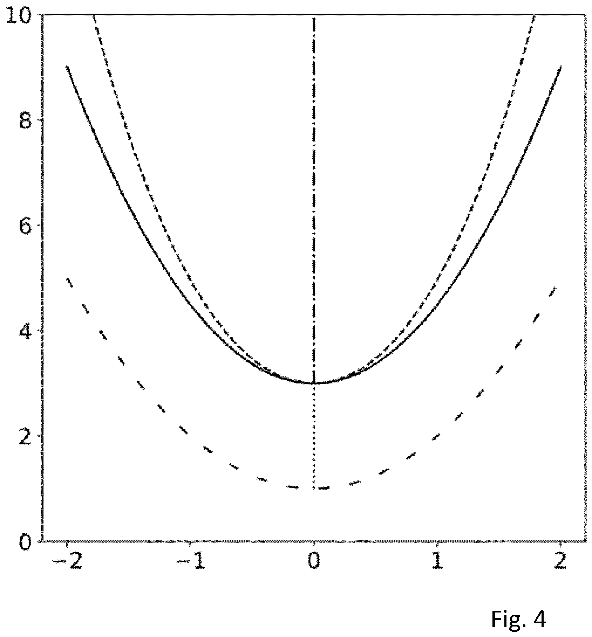

Konkret wird in dem im Folgenden beschriebenen Ausführungsbeispiel ein Pearson Verteilungssystem mit acht Typen von Verteilungen betrachtet. Fig. 4 zeigt für dieses System die sogenannte Schiefe-Kurtosis Ebene, wobei für ein Ausführungsbeispiel entlang der horizontal verlaufenden Achse Werte der Schiefe und entlang der vertikal verlaufenden Achse Werte der Kurtosis aufgetragen sind. Die Schiefe-Kurtosis Ebene wird im Folgenden Pearson Ebene genannt. Jeder Punkt der Pearson Ebene außerhalb des verbotenen Bereichs, der durch ein Koordinatenpaar bestehend aus einer Schiefekoordinate und einer Kurtosiskoordinate definiert ist, ist eindeutig einer Verteilung bzw. einer Gruppe von Verteilungen zugeordnet. Die Mitglieder der Gruppe unterscheiden sich noch durch die Werte der weiteren Momente wie insbesondere des Erwartungswerts und der Varianz. Es besteht ein stetiger Zusammenhang zwischen der Lage in der Pearson Ebene und der Form der zugehörigen Verteilung bzw. Gruppe von Verteilungen. Dies gilt nicht nur unmittelbar hinsichtlich der Schiefe und der Kurtosis sondern auch hinsichtlich weiterer Eigenschaften, insbesondere des Werteintervalls, über das hinweg die Gruppe von Verteilungen geeignet ist, Stichproben oder Messdaten-Werte statistisch zu modellieren und ihre Wahrscheinlichkeit vorauszusagen. Wenn also zwei Punkte in der Pearson Ebene nahe bei einander liegen, so sind sich auch die zugehörigen zwei Verteilungen ähnlich, wenn man bei den zwei Verteilungen den gleichen Erwartungswert und die gleiche Varianz annimmt.

Das Beispiel der Pearson Ebene, das in Fig. 4 dargestellt ist, wurde auf Basis einer Standardisierung erstellt, bei der der Erwartungswert den Wert null hat und die Varianz den Wert eins hat.

In Fig. 4 ist unten in dem dargestellten Bereich der Ebene eine etwa parabelförmige gestrichelte Linie erkennbar. Für unterhalb dieser Linie liegende Wertepaare von Schiefe und Kurtosis gibt es keine zugehörigen Verteilungen. Der unterhalb dieser Linie liegende Bereich der Ebene kann daher als unzulässiger oder verbotener Bereich bezeichnet werden. Bei dem Schiefe-Wert null erstreckt sich von dieser Linie parallel zur Achse der Kurtosis eine punktierte Linie bis zu einer etwa parabelförmigen ununterbrochenen Linie. Die Wertepaare auf der punktierten Linie gehören zu Verteilungen des Pearson Verteilungstyps 2. In Verlängerung der punktierten Linie erstreckt sich parallel zur Kurtosisachse eine strichpunktierte Linie, deren Wertepaare zu Verteilungen des Pearson Verteilungstyps 7 gehören. Die Wertepaare der bereits erwähnten ununterbrochenen Linie gehören zu dem Pearson Verteilungstyp 3. Oberhalb der ununterbrochenen Linie ist eine ebenfalls parabelförmige gestrichelte Linie dargestellt auf der die Punkte der Wertepaare der Verteilungen des Pearson Verteilungstyps 5 liegen. Die Wertepaare der Punkte zwischen dem verbotenen Bereich und der ununterbrochenen Linie gehören zu Verteilungen des Pearson Verteilungstyps 1. Die Wertepaare der Punkte zwischen der ununterbrochenen Linie und der oberen gestrichelten Linie gehören zu Verteilungen des Pearson Verteilungstyps 6. Die Wertepaare der Punkte oberhalb der oberen gestrichelten Linie gehören zu Verteilungen des Pearson Verteilungstyps 4. Im gemeinsam Schnittpunkt bzw. Endpunkt sämtlicher erwähnter Linien mit Ausnahme der unteren gestrichelten Linie befindet sich das Wertepaar des einzigen Punkts der Verteilung des Pearson Verteilungstyps 0, der auch als Normalverteilung bekannt ist.

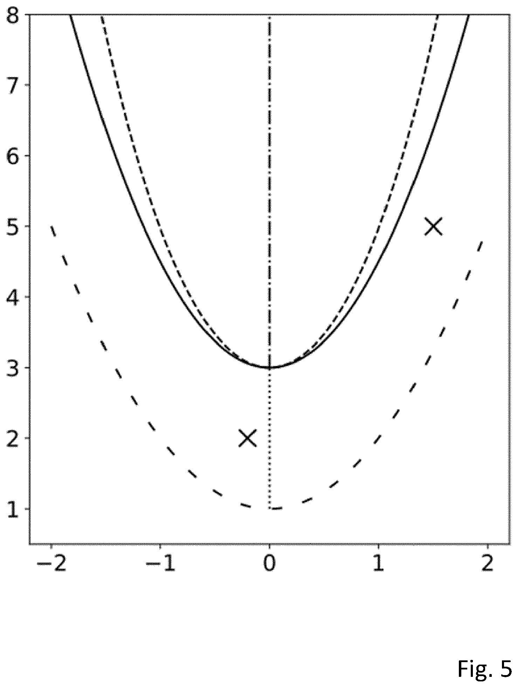

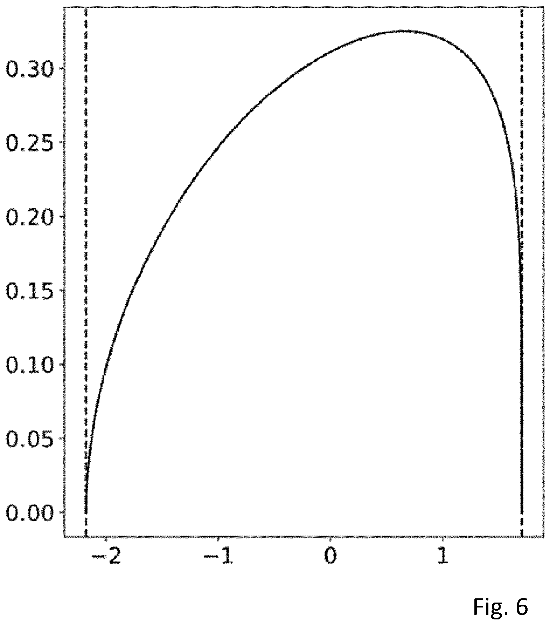

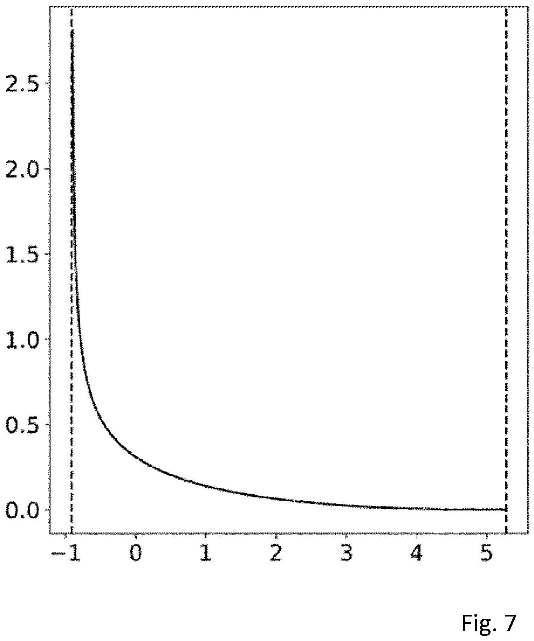

In dem in Fig. 5 dargestellten Bereich der Pearson Ebene sind zwei Kreuze eingezeichnet, um zwei Punkte in der Ebene hervorzuheben. Die zugehörigen Verteilungen sind in Fig. 6 und Fig. 7 dargestellt. Diese beiden Verteilungen gehören zum Pearson Verteilungstyp 1. Die Schiefe der in Fig. 6 dargestellten Verteilung ist negativ und näher bei dem Wert null als die positive Schiefe der in Fig. 7 dargestellten Verteilung. Diese Verteilung sieht daher symmetrischer aus als die Verteilung, die in Fig. 7 dargestellt ist. Die Kurtosis der in Fig. 7 dargestellten Verteilung hat einen positiven Wert mit einem größeren Betrag als der positive Wert der in Fig. 6 dargestellten Verteilung.

Der Range einer Stichprobe stellt ein Intervall der Messdaten-Werte dar. Gefordert wird nun, dass die an die Stichprobe angepasste Verteilung einen Support besitzt, der mindestens den Range des Intervalls enthält. Wenn also der Range gegeben ist durch

$$\text{Range} = [r_{min}, r_{max}]$$

und der Support der Verteilung durch

$$\text{Support} = [v_{min}, v_{max}],$$

dann soll gelten:

$$\text{Range} \subseteq \text{Support},$$

d.h. der Range soll im Support vollständig enthalten sein. Diese Forderung ist äquivalent zu:

$$v_{min} \leq r_{min}, \qquad (1)$$

$$v_{max} \geq r_{max}. \qquad (2)$$

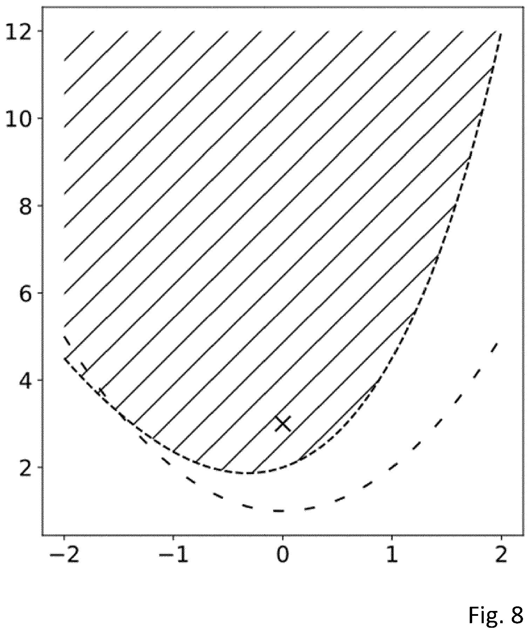

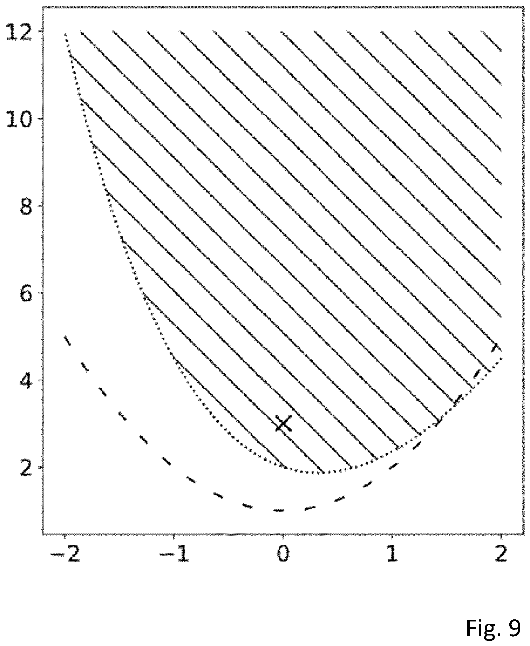

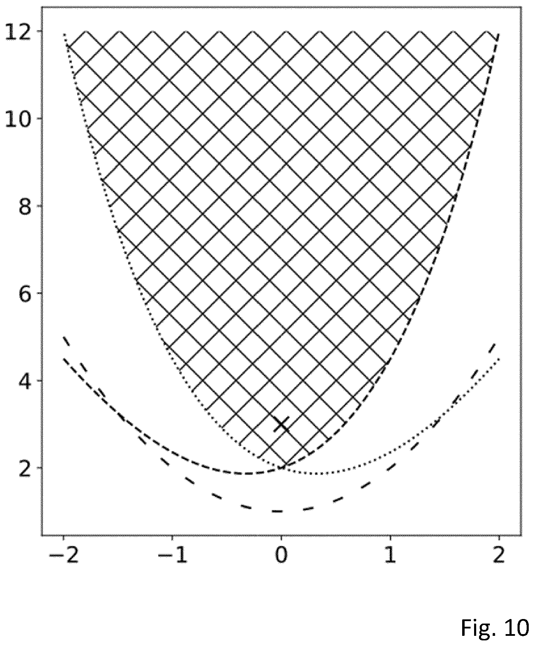

Aus Gleichung (1) ergibt sich, dass eine Verteilung gesucht wird, deren untere Supportgrenze $v_{min}$ kleiner oder gleich dem Minimum des Range $r_{min}$ ist. Jede Verteilung lässt sich als Schiefe-/Kurtosis-Punkt in der Pearson-Ebene visualisieren. So kann die Menge aller Verteilungen, die Gleichung (1) erfüllen, als Menge in der Pearson-Ebene dargestellt werden. Es ergibt sich eine Lösungsmenge, die für ein Ausführungsbeispiel schraffiert in Fig. 8 dargestellt ist. Beachtenswert ist, dass die Lösungsmenge unten durch eine konvexe Grenzlinie begrenzt ist, d. h. oberhalb der Grenzlinie liegt. Gleichermaßen kann ausgehend von Gleichung (2) eine Lösungsmenge erhalten werden, die für das Ausführungsbeispiel in Fig. 9 schraffiert dargestellt ist. In Fig. 8 und Fig. 9 ist als Orientierung wie in Fig. 4 die gestrichelte Linie dargestellt, welche die Grenze zu dem verbotenen Bereich bildet. Die Gesamt-Lösungsmenge ist für das Ausführungsbeispiel in Fig. 10 kreuzweise schraffiert dargestellt. Bezüglich der Tatsache, dass sich die Teil-Lösungsmengen in Fig. 8 und Fig. 9 in den verbotenen Bereich hinein erstrecken, sind diese Figuren schematisch zu verstehen. Tatsächlich erstrecken sich die Teil-Lösungsmengen nicht in den verbotenen Bereich hinein.

Der Schnittpunkt der Grenzkurven der Teil-Lösungsmengen, die in Fig. 10 durch eine gepunktete und eine gestrichelte Linie dargestellt sind, hat das Wertepaar der Schiefe und der Kurtosis, das derjenigen statistischen Verteilung innerhalb des Systems von Verteilungen entspricht, für welche der Support gleich dem Range ist. Dieser Schnittpunkt liegt in dem Ausführungsbeispiel bei dem Schiefewert null, kann jedoch in anderen Fällen auch negative oder positive Schiefewerte annehmen.

$M_L$ bezeichnet die Lösungsmenge ausgehend von Gleichung (1) und $M_R$ bezeichnet die Lösungsmenge ausgehend von Gleichung (2), die wie folgt definiert werden können:

$$M_L = \{(s,k) : v_{min}(s,k) \leq r_{min}\}$$

und

$$M_R = \{(s,k) : r_{max} \leq v_{max}(s,k)\}.$$

Dabei bezeichnet *(s, k)* ein Wertepaar der Schiefe s und der Kurtosis *k.*

Im Folgenden wird nun ein Ausführungsbeispiel für die Bestimmung der Mengen $M_L$ und $M_R$ beschrieben.

Das Pearson Verteilungssystem beruht auf der folgenden gewöhnlichen Differenzialgleichung für eine Wahrscheinlichkeitsdichtefunktion. Eine normierte Lösung *f(x)* der gewöhnlichen Differenzialgleichung

$$f'(x) = \frac{a(x)}{b(x)} f(x) \qquad (3)$$

mit den Polynomen

$$a(x) = x + a_0 , \qquad a_0 \in R \qquad\qquad (4)$$

$$b(x) = b_2 + b_1 x + b_0 , \qquad b_0,\ b_1,\ b_2 \in R, \qquad\qquad (5)$$

wobei R die Menge realer Zahlen bezeichnet, wird im Folgenden Pearson Wahrscheinlichkeitsdichtefunktion genannt.

Die Koeffizienten der Polynome *a(x)* und *b(x)*, wie in den Gleichungen (4) und (5) definiert, parametrisieren die noch unbekannte Wahrscheinlichkeitsdichtefunktion *f(x)*. Insbesondere die Form und der Definitionsbereich der Wahrscheinlichkeitsdichtefunktion hängen stark von der Anzahl und dem Ort der Nullstellen des Nenner-Polynoms *b(x)* ab.

Um die Wahrscheinlichkeitsdichtefunktion in Beziehung zu Größen zu setzen, die eine statistische Bedeutung haben, wird eine Beziehung zwischen den Koeffizienten $a = (a_0, 1)^T$ und b = $(b_0, b_1, b_2)^T$ einerseits und einem konkreten Satz von Momenten der Wahrscheinlichkeitsdichtefunktion hergestellt. Die standardisierten Momente $\tilde{\mu}_n$, siehe oben, sind invariant bezüglich von Skalierung- und Verschiebungstransformationen der Zufallsvariable X, für die sie berechnet werden bzw. berechnet worden sind. Daher können die standardisierten Momente $\tilde{\mu}_n$ der Zufallsvariable X als unabhängig von ihren rohen und zentralen Momenten $v_1(X)$ und $\mu_2(X)$ (siehe oben) aufgefasst werden. Ausgehend hiervon kann die eine Definition eines parametrisierten Tupels M von Momenten für eine Pearson Wahrscheinlichkeitsdichtefunktion und seiner zugeordneten Zufallsvariablen X vorgenommen werden. Die Definition des Tupels M wurde oben bereits vorgenommen. Dabei wurden die erwähnten Bezeichnungen $v_1(X)$, $\mu_2(X)$, $\tilde{\mu}_3$ und $\tilde{\mu}_4$ für den Erwartungswert, die Varianz, die Schiefe und die Kurtosis eingeführt. Auf einen Teil-Satz der Elemente des Tupels M wird Bezug genommen, indem die entsprechenden Indizes verwendet werden, z.B. $M_{1:2}(X) = (v_1(X), \mu_2(X))$.

Im Folgenden werden die Rohmomente $\{v_i(X)\}_{i=1}^4$ und das Tupel M in Beziehung zu den Parametern *a* und *b* der gewöhnlichen Differenzialgleichungen gesetzt. Die Kopplung zwischen den Momenten und den Koeffizienten kann in Form einer Matrizengleichung geschrieben werden als:

$$\begin{bmatrix} 0 & 1 & 2\nu_1 & 1 \\ 1 & 2\nu_1 & 3\nu_2 & \nu_1 \\ 2\nu_1 & 3\nu_2 & 4\nu_3 & \nu_2 \\ 3\nu_2 & 4\nu_3 & 5\nu_4 & \nu_3 \end{bmatrix} \begin{bmatrix} b_0 \\ b_1 \\ b_2 \\ a_0 \end{bmatrix} = - \begin{bmatrix} \nu_1 \\ \nu_2 \\ \nu_3 \\ \nu_4 \end{bmatrix} .$$

$$(6)$$

Im Folgenden wird die oben bereits erwähnte Standardisierung vorgenommen, um die Lösung zu vereinfachen. Eine entsprechende Lösung kann jedoch auch ohne eine solche Standardisierung abgeleitet werden. Die Lösungsgleichungen werden dann entsprechend komplexer. Für $v_1 = 0$ und $v_2 = 1$ lautet die Lösung der Gleichung (6):

$$b = \frac{1}{c} \begin{bmatrix} 4\zeta_2 - 3\zeta_1^2 \\ (3 + \zeta_2)\zeta_1 \\ 2\zeta_2 - 3\zeta_1^2 - 6 \end{bmatrix} , \quad a = \begin{bmatrix} -b_1 \\ 1 \end{bmatrix}$$

$$(7)$$

wobei $\tilde{\mu}_3(X) = \zeta_1(X)$ und $\tilde{\mu}_4(X) = \zeta_2(X)$ als Bezeichnungen für die Momente der Schiefe und der Kurtosis verwendet werden und wobei $c = 2(9 + 6\zeta_1^2 - 5\zeta_2)$ . Unter Berücksichtigung von Gleichung (4) und Gleichung (6) kann nun die Parametrisierung der Pearson Wahrscheinlichkeitsdichtefunktion wie folgt durchgeführt werden:

Wenn ein Parametrisierungs-Momenten-Tupel M* mit einem Skalierungs- und Verschiebungsanteil $M^*_{1:2}(X) = \{v^*_1, \mu^*_2\}$ und einem Formanteil $M^*_{3:4}(X) = \{\zeta^*_1, \zeta^*_2\}$ gegeben ist, dann kann die entsprechende Pearson Verteilungsdichtefunktion in zwei Schritten konstruiert werden. In einem ersten Schritt werden die Koeffizienten a* und b* unter Verwendung von Gleichung (7) berechnet und wird das Problem der Pearson Differenzialgleichung mit diesen Parametern gelöst, um eine standardisierte Pearson Verteilungsdichtefunktion $f_s(x)$ und die entsprechende Zufallsvariable X zu erhalten. In einem zweiten Schritt werden eine Transformation $\tau(x) = (x - v^*_1)/\sqrt{\mu^*_2}$ aufgestellt und die geforderte Pearson Zufallsvariable X als $X = \tau^{-1}(X_s)$ und seine Wahrscheinlichkeitsdichtefunktion als $f(x) = \tau'(x) f_s(\tau(x))$ definiert. Dabei bezeichnen der hochgestellte Index -1 die inverse Funktion und das hochgestellte Komma die erste Ableitung der Funktion. Nun ist $M(X) = M^*$. Dies zeigt, dass jedes der Tupel $M^*_{1:2}(X)$ und $M^*_{3:4}(X)$, d.h. der Skalierung- und Verschiebungsanteil einerseits und der Formanteil andererseits, unabhängig voneinander bei der Vorgehensweise der Anpassung der Pearson Verteilungsdichtefunktion an die entsprechenden Momente der Verteilung gehandhabt werden kann.

Die Pearson Ebene wird als Ebene E reeller Zahlen definiert, wobei die erste Koordinate die Schiefe und die zweite Koordinate die Kurtosis ist. Die Pearson Ebene E wird nun in drei Bereiche unterteilt, die durch ihr Verhalten bezüglich der Nullstellen gekennzeichnet sind. Das Unterscheidungskriterium $\kappa(\zeta)$ für die drei Bereiche und die entsprechenden Grenzkurven ist definiert als:

$$\kappa(\zeta) := \frac{\zeta_1^2(\zeta_2 + 3)^2}{4(2\zeta_2 - 3\zeta_1^2 - 6)(4\zeta_2 - 3\zeta_1^2)} .$$

Die Haupt-Bereiche der Pearson Ebene E können wie folgt angegeben werden. Wenn $x_1$ und $x_2$ die Nullstellen des Polynoms $b(x; \zeta)$ sind, dessen Koeffizienten b Elemente des dreidimensionalen Raums reeller Zahlen sind und unter Verwendung von Gleichung (7) berechnet werden, dann können die Bereiche $R_1$, $R_4$ und $R_6$ der Pearson Ebene E wie folgt angegeben werden:

$$\mathcal{R}_1 := \{\zeta \in \mathcal{E} : x_1, x_2 \in \mathbb{R} \wedge x_1 x_2 < 0\} = \{\zeta \in \mathcal{E} : \kappa(\zeta) < 0\},$$

$$\mathcal{R}_4 := \{\zeta \in \mathcal{E} : x_1, x_2 \in \mathbb{C}\} = \{\zeta \in \mathcal{E} : \kappa(\zeta) \in (0, 1)\},$$

$$\mathcal{R}_6 := \{\zeta \in \mathcal{E} : x_1, x_2 \in \mathbb{R} \wedge x_1 x_2 > 0\} = \{\zeta \in \mathcal{E} : \kappa(\zeta) > 1\}.$$

$$(8)$$

Die Grenzkurven $C_i$ mit i = 2, 3, 5, 7 der genannten Bereiche, im Folgenden als Pearson Kurven bezeichnet, können wie folgt angegeben werden:

$$\mathcal{C}_2 := \{\zeta \in \mathcal{E} : \zeta_1 = 0 \wedge \zeta_2 \in (1, 3)\},$$

$$\mathcal{C}_3 := \{\zeta \in \mathcal{E} : 2\zeta_2 - 3\zeta_1^2 - 6 = 0\} = \{\zeta \in \mathcal{E} : \kappa(\zeta) \in \{-\infty, \infty\}\},$$

$$\mathcal{C}_5 := \{\zeta \in \mathcal{E} : \kappa(\zeta) = 1\},$$

$$\mathcal{C}_7 := \{\zeta \in \mathcal{E} : \zeta_1 = 0 \wedge \zeta_2 > 3\}.$$

$$(9)$$

Ferner wird der oben genannte verbotene Bereich

$$\mathcal{R}_\otimes := \{\zeta \in \mathcal{E} : \zeta_2 < \zeta_1^2 + 1\}$$

$$(10)$$

der Pearson Ebene eingeführt, dessen Grenzlinie

$$\mathcal{C}_\otimes := \{\zeta \in \mathcal{E} : \zeta_2 = \zeta_1^2 + 1\}$$

$$(11)$$

gegeben ist. Der verbotene Bereich enthält einerseits Paare von Punkten $\zeta = (\zeta_1, \zeta_2)$, die niemals als Lösung der Berechnung der Schiefe und der Kurtosis auftreten können. Andererseits sind die Lösungen der gewöhnlichen Pearson Differenzialgleichungen für Punkte auf der verbotenen Kurve nicht integrierbar und repräsentieren aus diesem Grund keine Wahrscheinlichkeitsdichteverteilung. Daher können die Bereiche mit allen Punkten in der Pearson Ebene, für die eine Lösung gefunden werden kann, wie folgt definiert werden:

$$\mathcal{R} := \mathcal{E} \setminus (C_\otimes \cup \mathcal{R}_\otimes).$$

$$(12)$$

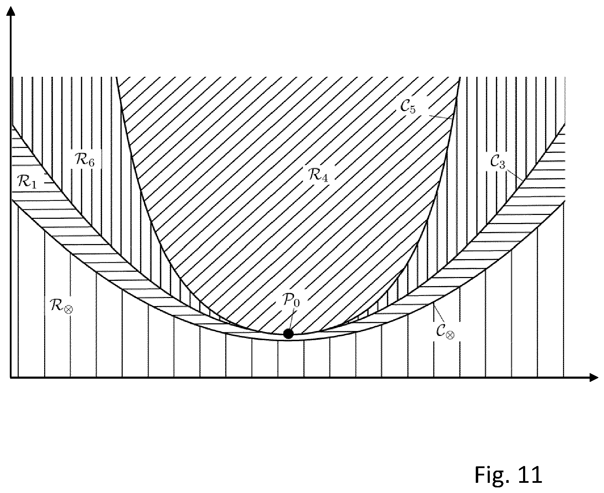

In Worten ausgedrückt kann die Gesamtheit dieser Bereiche als die Menge von Punkten angegeben werden, die der gesamten Ebene vermindert um die Menge der Punkte im verbotenen Bereich und vermindert um die Menge der Punkte auf der Grenzlinie des verbotenen Bereichs entspricht. Fig. 11 zeigt für ein Ausführungsbeispiel die oben genannten drei Bereich $R_1$, $R_4$, $R_6$ und zwei ihrer oben genannten Grenzkurven $C_3$ und $C_5$. Außerdem sind im unteren Teil der Fig. 11 ähnlich wie in Fig. 4 der verbotene Bereich und seine Grenzlinie dargestellt. Der in Fig. 11 dargestellte Punkt $P_0$ stellt die Lage des Wertepaars der Schiefe und der Kurtosis der Normalverteilung dar.

Im Folgenden werden lediglich standardisierte Pearson Verteilungen betrachtet. Oben wurde bereits begründet, warum eine solche Betrachtung ausreichend ist. Zunächst wird nun ein Ausdruck für das Support-Intervall von Pearson Verteilungen abhängig von der Schiefe $\zeta_1$ und der Kurtosis $\zeta_2$ abgeleitet. Danach werden Kurven bzw. Grenzlinien für die oben genannten Lösungsmengen abgeleitet. Schließlich werden Sätze der Lösungsmengen für die rechte und die linke Supportgrenze abgeleitet.

Die Nullstellen $x_1$ und $x_2$ des in Gleichung (5) definierten Polynoms $b(x)$ können wie folgt angegeben werden:

$$x_1 = \frac{-b_1 - \sqrt{b_1^2 - 4b_0 b_2}}{2b_2}$$

$$(13)$$

und

$$x_2 = \frac{-b_1 + \sqrt{b_1^2 - 4b_0 b_2}}{2b_2}.$$

$$(14)$$

Wenn die Koeffizienten $b_i$ als Funktionen der Schiefe und der Kurtosis angegeben werden, ergeben sich die folgenden Gleichungen für die Nullstellen $x_i = x_i(\zeta)$:

$$x_1(\zeta) = \frac{u(\zeta) + \operatorname{sgn}(c)\sqrt{v(\zeta)}}{w(\zeta)}$$

$$(15)$$

und

$$x_2(\zeta) = \frac{u(\zeta) - \operatorname{sgn}(c)\sqrt{v(\zeta)}}{w(\zeta)}$$

$$(16)$$

Mit $c = 2(9 + 6\zeta_1^2 - 5\zeta_2)$ können die folgenden Hilfsfunktionen angegeben werden:

$$u(\zeta) := \zeta_1(\zeta_2 + 3),$$

$$v(\zeta) := -36\zeta_1^4 + \zeta_1^2\left(\zeta_2^2 + 78\zeta_2 - 63\right) - 32(\zeta_2 - 3)\zeta_2,$$

$$w(\zeta) := 6\zeta_1^2 - 4\zeta_2 + 12.$$

$$(17)$$

Die Nullstellen $x_1$ und $x_2$ sind komplementär bezüglich sgn(c), d.h bezüglich des Vorzeichens. Dies führt zu den folgenden alternativen Gleichungen:

$$x_{(1)}(\zeta) := \frac{u(\zeta) - \sqrt{v(\zeta)}}{w(\zeta)}$$

$$(18)$$

und

$$x_{(2)}(\zeta) := \frac{u(\zeta) + \sqrt{v(\zeta)}}{w(\zeta)}.$$

$$(19)$$

Unter Bezugnahme auf die Gleichungen (18) und (19) ist anzumerken, dass das Argument der Quadratwurzel im Zähler des Bruchs lediglich nicht für negative Ausdrücke definiert ist. Daher sind die Funktionen gemäß Gleichungen (18) und (19) nicht für den verbotenen Bereich und seine Grenzlinie definiert.

Das Support-Intervall $I = (\xi_L, \xi_R)$ in Bezug auf eine standardisierte Pearson Verteilung mit einem Momenten-Tupel $M^*_{3:4} = \zeta$, wobei die linke Grenze des Support-Intervalls durch $\xi_L$ und die rechte Grenze des Support-Intervalls durch $\xi_R$ bezeichnet ist, wird wie folgt definiert:

$$\xi_L = x_L(\zeta) := \begin{cases} x_{(1)}(\zeta), & \zeta \in \mathcal{R}_1 \cup \mathcal{C}_2 \vee (\zeta_1 > 0 \wedge \zeta \in \mathcal{R}_6 \cup \mathcal{C}_5), \\ -\frac{2}{\zeta_1}, & \zeta_1 > 0 \wedge \zeta \in \mathcal{C}_3, \\ -\infty, & else \end{cases} \tag{20}$$

und

$$\xi_R = x_R(\zeta) := \begin{cases} x_{(2)}(\zeta), & \zeta \in \mathcal{R}_1 \cup \mathcal{C}_2 \vee (\zeta_1 < 0 \wedge \zeta \in \mathcal{R}_6 \cup \mathcal{C}_5), \\ -\frac{2}{\zeta_1}, & \zeta_1 < 0 \wedge \zeta \in \mathcal{C}_3, \\ \infty, & else. \end{cases} \tag{21}$$

Dabei bedeutet "else" sonst. Ausgehend von Gleichungen (20) und (21) können nun für Grenzkurven $c_L(t)$ und $c_R$ (t) der Lösungsbereiche die folgenden impliziten Gleichungen angegeben werden:

$$x_L(c_L(t)) = \xi_L \quad \text{for} \quad \xi_L < 0,$$
$$x_R(c_R(t)) = \xi_R \quad \text{for} \quad \xi_R > 0 \tag{22}$$

wobei "for" für bedeutet. Bevor diese Kurven berechnet werden, werden Vorüberlegungen angestellt. Die naive Lösung der Gleichungen $x_{(1)}(\zeta) = \xi_L$ und $x_{(2)}(\zeta) = \xi_R$ für die Nullstellen führt zu der Kurve $s(t; \xi)$, die definiert ist durch:

$$s(t;\xi) := \begin{bmatrix} t \\ \dfrac{6\xi^2 - 3\xi t + 3t^2 + 3\xi^2 t^2}{4 + 2\xi^2 + \xi t} \end{bmatrix} \tag{23}$$

**für die** $x_{(1)}(s(t; \xi_L)) = \xi_L$ und $x_{(2)}(s(t; \xi_R)) = \xi_R$. Die Kurve $s(t; \xi)$ hat die folgenden Eigenschaften: Für $\xi \neq 0$ existiert eine Singularität bei

$$\zeta_1^{\infty}(\xi) := -(4 + 2\xi^2)/\xi;$$

Für $\xi \neq 0$ existiert ein Schnittpunkt in dem folgenden Punkt der verbotenen Kurve, nämlich der Grenzlinie des verbotenen Bereichs:

$$\zeta_1^{\otimes}(\xi) := (\xi^2 - 1)/\xi$$

Für $|\xi| > \sqrt{2}$ existiert ein Schnittpunkt mit der oben genannten Kurve bzw. Grenzlinie $\mathcal{C}_5$, siehe Gleichung (9):

$$\zeta_1^5(\xi) := -4\xi/(\xi^2 - 1)$$

Für $\xi \neq 0$ existiert ein eindeutiges globales Minimum bei:

$$\zeta_1^{min} := \zeta_1^\infty - 2\sqrt{\xi^2 + 4/\xi^2 + 5} = \frac{2}{\xi + 2/\xi - \sqrt{\xi^2 + 4/\xi^2 + 5}}$$

Die Gleichungen $x_{(1)}(\zeta) = \xi_L$ und $x_{(2)}(\zeta) = \xi_R$ werden durch den Zweig der Kurve $s(t; \xi)$ gelöst, der für $x_{(1)}(\zeta)$ rechts und für $x_{(2)}(\zeta)$ links von $\zeta_1^\infty(\xi)$ liegt.

Zwar ist $s(t; \xi)$ nicht die Lösung der Gleichungen (22), aber die folgende Überlegung zeigt, dass lediglich der Definitionsbereich der Kurve $s(t; \xi)$ angepasst werden muss, um die Lösung zu erhalten. Die impliziten Gleichungen (22) für die Support-Grenzlinien $c_L(t; \xi_L)$ und $c_R(t; \xi_R)$ haben die Lösungen

$$c_L(t; \xi_L) := s(t; \xi_L) \quad with \quad \mathcal{D}(c_L) := \begin{cases} \left(\zeta_1^\otimes(\xi_L), \zeta_1^5(\xi_L)\right], & if\ \xi_L \in (-\infty, -\sqrt{2}), \\ \left(\zeta_1^\otimes(\xi_L), \zeta_1^\infty(\xi_L)\right), & if\ \xi_L \in [-\sqrt{2}, 0) \end{cases}$$

und

$$c_R(t; \xi_R) := s(t; \xi_R) \quad with \quad \mathcal{D}(c_R) := \begin{cases} \left[\zeta_1^5(\xi_R), \zeta_1^\otimes(\xi_R)\right), & if\ \xi_R \in (\sqrt{2}, \infty). \\ \left(\zeta_1^\infty(\xi_R), \zeta_1^\otimes(\xi_R)\right), & if\ \xi_R \in (0, \sqrt{2}]. \end{cases}$$

Dabei bedeuten "with" mit und "if" falls. Daraus folgt, dass es eine Transformation zwischen der rechten und der linken Support-Grenzlinie gibt. Es gilt die Beziehung:

$$c_R(t; \xi_R) = c_L(-t; -\xi_R)$$

In Bezug auf die Gleichungen (22) folgt daraus:

$$x_L\big(c_L(t; \xi_L)\big) = \xi_L < 0 \qquad und \qquad x_R\big(c_R(t; \xi_R)\big) = \xi_R > 0$$

Für den Bereich der Pearson Ebene außerhalb des verbotenen Bereichs können nun die den oben genannten Lösungsmengen $M_L$ von Gleichung (1) und $M_R$ von Gleichung (2) äquivalenten Mengen $R_L(\xi)$ für $\xi < 0$ bezüglich der linken bzw. unteren Supportgrenze $v_{min}$ und $R_R(\xi)$ für $\xi > 0$ bezüglich der rechten bzw. oberen Supportgrenze $v_{max}$ wie folgt definiert werden:

$$\mathcal{R}_L(\xi) = \{\zeta \in \mathcal{R} : x_L(\zeta) \leq \xi\}, \quad \xi < 0,$$

$$\mathcal{R}_R(\xi) = \{\zeta \in \mathcal{R} : x_R(\zeta) \geq \xi\}, \quad \xi > 0.$$

Daraus folgt, dass für eine Pearson Verteilungsdichtefunktion mit einem Support-Bereich $(a, b)$ die Beziehung $a \leq \xi$ gilt, wenn $\xi < 0$ und wenn der Punkt der Pearson Ebene mit den Koordinaten $\zeta$ in der Lösungsmenge bzw. dem Support-Bereich $R_L(\xi)$ für die linke Support-Grenze liegt. Analog gilt $b \geq \xi$, wenn $\xi > 0$ und wenn der Punkt der Pearson Ebene mit den Koordinaten $\zeta$ in der Lösungsmenge bzw. dem Support-Bereich $R_R(\xi)$ für die rechte Support-Grenze liegt.

Der linke Support-Bereich $R_L(\xi)$ für $\xi < 0$ kann durch die Menge $S(\xi)$ von Punkten in der Pearson Ebene ausgedrückt werden, die die folgenden einzelnen Mengen $S_i(\xi)$ vereint, wobei i = 1, 2, 3:

$$\mathcal{S}_1(\xi) := \{\zeta \in \mathcal{R} : \zeta_1 \leq \mathcal{D}_\xi\},$$

$$\mathcal{S}_2(\xi) := \{\zeta \in \mathcal{R} : \zeta_1 \in \mathcal{D}_\xi \wedge \zeta_2 \geq c_L(\,\cdot\,; \xi)\},$$

$$\mathcal{S}_3(\xi) := \{\ \zeta \in \mathcal{R} : \zeta_1 \geq \mathcal{D}_\xi \wedge v(\xi) < 0\ \},$$

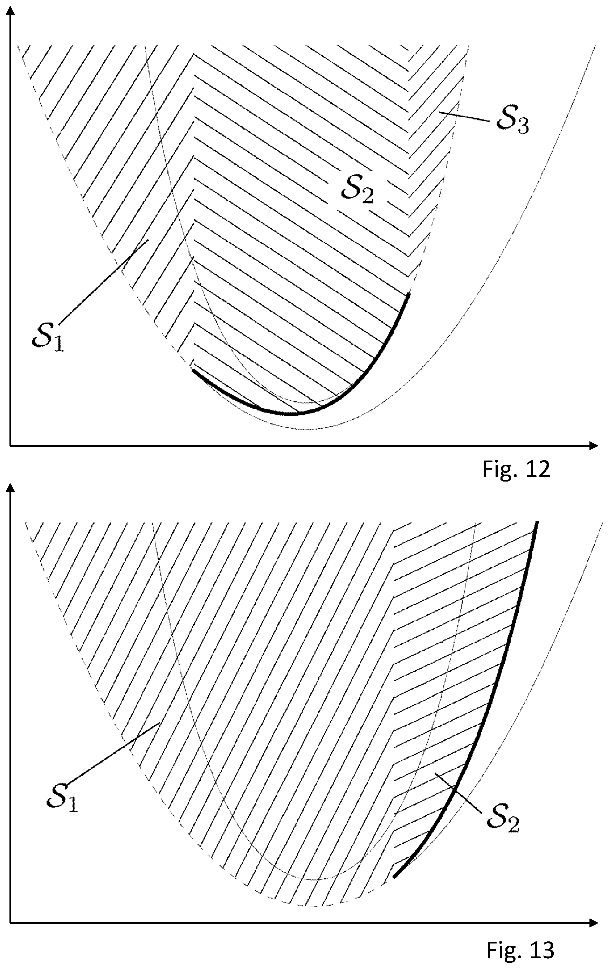

Dabei bezeichnet $D_\xi$ den Definitionsbereich der linken Support-Grenzkurve $c_L$, sich $v(\xi)$ auf die mittlere der Gleichungen (17) und bezeichnet R den Bereich in der Pearson Ebene ohne den verbotenen Bereich und dessen Grenzlinie. Fig. 12 zeigt den die Lösungsmenge $R_L(\xi)$ bezüglich der linken bzw. unteren Supportgrenze $v_{min}$ für $\xi = -2,5$. Fig. 13 zeigt diese Lösungsmenge $R_L(\xi)$ für $\xi = -0,5$. Während Fig. 12 alle drei Mengen $S_i$ zeigt, ist die Menge $S_3$ im Fall der Fig. 13 leer. Dies gilt für den Bereich $-\sqrt{2} \leq \xi < 0$, da kein Schnittpunkt für die linke Grenzkurve $c_L$ und die oben genannte Kurve $C_5$ existiert. In Fig. 12 und Fig. 13 ist jeweils die Grenzkurve der Menge $S_2$ hervorgehoben, indem die Grenzkurve durch eine breite ununterbrochene Linie dargestellt ist. Die gestrichelte Linie als Grenzkurve der Menge $S_1$ ist die Grenzlinie des verbotenen Bereichs.

Ausgehend von dem Zusammenhang zwischen dem linken Support-Bereich $R_L(\xi)$ und $\xi$ kann Folgendes angegeben werden: Für zwei negative Werte $b \leq a < 0$ gilt:

$$\mathcal{R}_L(b) \subseteq \mathcal{R}_L(a),$$

$$\zeta \in \mathcal{R}_L(a) \setminus \mathcal{R}_L(b) \Rightarrow (x_L(\zeta), 0) \subset (b, 0).$$

Wenn Werte $\xi_L < 0 < \xi_R$ gegeben sind, d.h. Lösungsmengen für die rechte und die linke Support-Grenze definiert sind, gilt für die Schnittmenge Folgendes:

$$\mathcal{R}_{L \cap R}(\xi_L, \xi_R) := \mathcal{R}_L(\xi_L) \cap \mathcal{R}_R(\xi_R)$$

$$= \{\ \zeta \in \mathcal{R} : (\xi_L, \xi_R) \subseteq \operatorname{supp}(f(\ \cdot\ ; \zeta))\ \}.$$

Die vorstehende Beschreibung enthält ein Ausführungsbeispiel für die Definition der Menge aller derjenigen statistischen Verteilungen, welche dazu in der Lage sind, eine Häufigkeit von Messdaten-Werten in dem gesamten Werteintervall (dem Range) zu beschreiben. Nun wird ein Ausführungsbeispiel der Erfindung in Bezug auf die Prüfung beschrieben, ob in der definierten Menge eine statistische Verteilung existiert, die die für eine Stichprobe ermittelten Momenten-Werte der Schiefe und der Kurtosis aufweist.

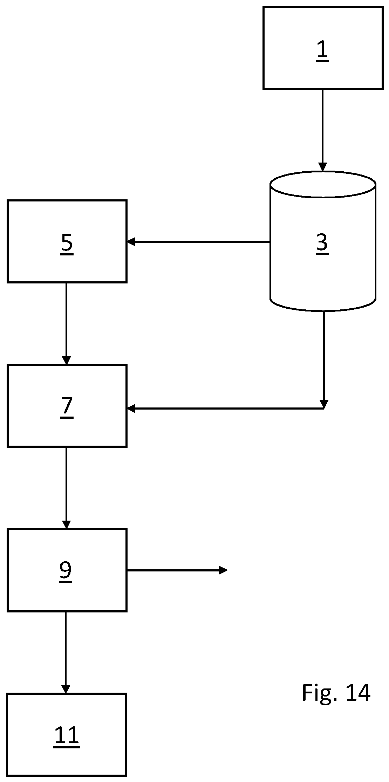

Fig. 14 zeigt schematisch eine Anordnung von Einrichtungen zum Auswerten einer Stichprobe von Messdaten aus einer Vermessung einer Vielzahl von Werkstücken. Die Darstellung in der Fig. 14 kann auch als Flussdiagramm zur Erläuterung einer Ausführungsform eines Verfahrens zum Auswerten der Stichprobe von Messdaten aufgefasst werden.

Zum Beispiel ein Koordinatenmessgerät 1 vermisst die Vielzahl von Werkstücken und überträgt die Messdaten, optional nach einer Vorverarbeitung der Messdaten, zu einem Messdatenspeicher 3. Eine Definitionseinrichtung 5 ist ausgestaltet, für ein Werteintervall der Messdaten, das ein vorgegebenes Werteintervall oder ein Werteintervall der tatsächlich in der Stichprobe vorkommenden Messdaten ist, aus dem System von statistischen Verteilungen eine Menge aller derjenigen statistischen Verteilungen zu definieren, welche dazu in der Lage sind, eine Häufigkeit von Messdaten-Werten in dem gesamten Werteintervall zu beschreiben. In Fig. 14 ist ein Eingang der Definitionseinrichtung 5 mit einem Ausgang des Messdatenspeichers 3 verbunden. Daher kann die Definitionseinrichtung 5 insbesondere aus den vorhandenen Messdaten das Werteintervall ermitteln. Alternativ oder zusätzlich kann sie in dem Messdatenspeicher 3 gespeicherte Zusatzinformation über einen über das Werteintervall der Messdaten hinausgehendes Werteintervall erhalten. In der Praxis kann jedoch die Information über das vorgegebene Werteintervall auch auf andere Weise der Definitionseinrichtung 5 zur Verfügung gestellt werden, sodass eine Verbindung des Messdatenspeichers 3 mit der Definitionseinrichtung 5 nicht zwingend erforderlich ist.

Ein Ausgang der Definitionseinrichtung 5 ist mit einem Eingang einer Momenten-Ermittlungseinrichtung 7 verbunden, die ausgestaltet ist, aus der Stichprobe von Messdaten entsprechend einer ersten statistischen Verteilung jeweils einen Momenten-Wert der Schiefe und der Kurtosis zu ermitteln. Während des Betriebes bzw. während der Ausführung des Verfahrens ermittelt die Momenten-Ermittlungseinrichtung 7 Werte der Schiefe und der Kurtosis für die Stichprobe und übermittelt die Werte zu einer Prüfeinrichtung 9, die ausgestaltet ist, anhand der ermittelten Momenten-Werte zu prüfen, ob in der definierten Menge eine statistische Verteilung existiert, die die ermittelten Momenten-Werte der Schiefe und der Kurtosis aufweist, und ein entsprechendes Prüfergebnis zu erzeugen.

Durch das Prüfergebnis steht fest, ob eine solche statistische Verteilung in der definierten Menge existiert oder nicht. Wenn dies der Fall ist, dann kann zum Beispiel durch ein von der Prüfeinrichtung 9 ausgegebenen Signals bestätigt werden, dass die erste statistische Verteilung für den Zweck der statistischen Modellierung der Stichprobe über das gesamte vorgegebene Werteintervall geeignet ist. Wenn dies nicht der Fall ist, dann gibt die Prüfeinrichtung 9 das Prüfergebnis oder ein Signal zu einer Verteilungs-Ermittlungseinrichtung 11 aus, die eine für den Zweck der statistischen Modellierung der Stichprobe über das gesamte vorgegebene Werteintervall geeignete zweite statistische Verteilung ermittelt. Hierbei kann die Verteilungs-Ermittlungseinrichtung 11 zum Beispiel dasjenige Wertepaar aus der Pearson Ebene ermitteln, das einer geeigneten statistischen Verteilung entspricht. Mit der Information über das Wertepaar kann wiederum die geeignete statistische Verteilung als zweite statistische Verteilung erzeugt werden.

Die Definitionseinrichtung 5 und die Verteilungs-Ermittlungseinrichtung 11 können auch ohne die anderen in Fig. 14 dargestellten Einrichtungen eine Anordnung bilden. Ferner können die Definitionseinrichtung 5 und die Verteilungs-Ermittlungseinrichtung 11 der Vorbereitung der Auswertung einer Stichprobe von Messdaten dienen. In beiden Fällen ist die Definitionseinrichtung 5 ausgestaltet, für ein Werteintervall von Messdaten, das ein vorgegebenes Werteintervall oder ein Werteintervall einer auszuwertenden Stichprobe von Messdaten ist, aus dem System von statistischen Verteilungen eine Menge aller derjenigen statistischen Verteilungen zu definieren, welche dazu in der Lage sind, eine Häufigkeit von Messdaten-Werten in dem gesamten Werteintervall zu beschreiben. Die Verteilungs-Ermittlungseinrichtung 11 ist dann ausgestaltet, aus der definierten Menge eine statistische Verteilung zu ermitteln.

Wenn Fig. 14 als Flussdiagramm interpretiert wird, dann werden in einem Verfahrensschritt 1 Messdaten erzeugt, die in einem Verfahrensschritt 3 gespeichert werden. In einem Verfahrensschritt 5 wird die Menge aller derjenigen statistischen Verteilungen definiert, welche dazu in der Lage sind, eine Häufigkeit von Messdaten-Werten in dem gesamten Werteintervall zu beschreiben. In einem Verfahrensschritt 7 wird aus der Stichprobe von Messdaten entsprechend einer ersten statistischen Verteilung jeweils ein Momenten-Wert der Schiefe und der Kurtosis ermittelt. In einem Verfahrensschritt 9 wird anhand der ermittelten Momenten-Werte geprüft, ob in der definierten Menge eine statistische Verteilung existiert, die die ermittelten Momenten-Werte der Schiefe und der Kurtosis aufweist, und wird ein entsprechendes Prüfergebnis erzeugt. Der Ablauf der Verfahrensschritte ergibt sich aus den Pfeilen in Fig. 14.

Optionale bzw. zu konkreten Ausgestaltungen gehörende Einrichtungen bzw. Verfahrensschritte sind in Fig. 14 mit den Bezugszeichen 1, 3 und 11 bezeichnet. Verfahrensschritte 5 muss nicht zwangsläufig immer dann ausgeführt werden, wenn eine erste statistische Verteilung auf ihre Eignung zur statistischen Modellierung einer Stichprobe über das gesamte vorgegebene Werteintervall geprüft werden soll.

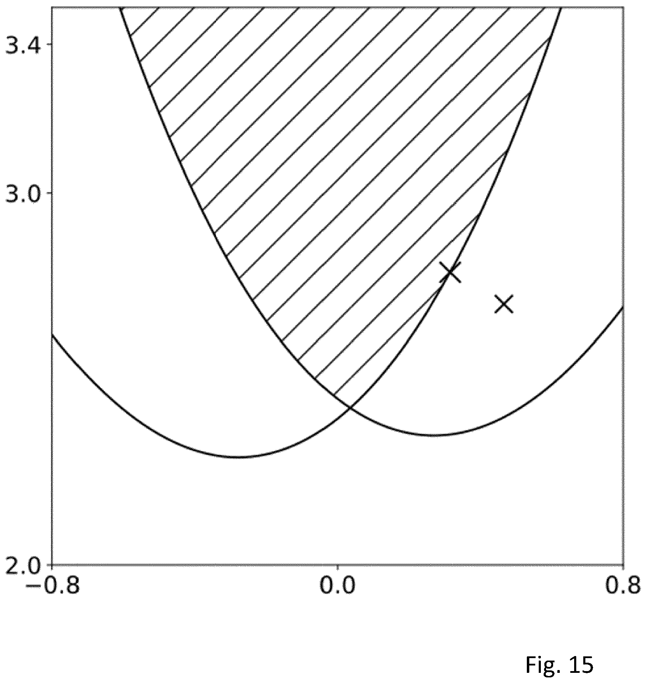

Insbesondere kann die Verteilungs-Ermittlungseinrichtung 11 auf Basis eines Abstandsmaßes für den Abstand zweier Verteilungen in der Pearson Ebene diejenige Verteilung als zweite statistische Verteilung ermitteln, deren Abstand zu der ersten statistischen Verteilung minimal ist. In Fig. 15 ist ein Beispiel für zwei Verteilungen in der Pearson Ebene dargestellt, die einen minimalen Abstand, hier den minimalen euklidischen Abstand in der Pearson Ebene, haben. Das weiter rechts unten gelegene Kreuz repräsentiert die erste statistische Verteilung in einem Fall, in dem diese nicht dazu geeignet ist, die Stichprobe über das gesamte vorgegebene Werteintervall statistisch zu modellieren. Erkennbar ist diese fehlende Eignung daran, dass das Kreuz außerhalb der schraffierten Fläche der Lösungsmenge geeigneter statistischer Verteilungen liegt. Das Kreuz repräsentiert die Verteilung, indem sie einen der Verteilung entsprechenden Punkt in der Pearson Ebene markiert, welcher wiederum dem Wertepaar der Schiefe und der Kurtosis der Verteilung entspricht. Gemäß der hier vorgegebenen Vorschrift wird aus der ersten statistischen Verteilung die geeignete zweite statistische Verteilung ermittelt, indem der Punkt in der in der Pearson Ebene gelegenen Lösungsmenge geeigneter Verteilungen ermittelt wird, der den geringsten Abstand zu dem Punkt der ersten statistischen Verteilung hat. In allen Fällen liegt dieser Punkt des geringsten Abstandes auf dem Rand der Lösungsmenge.

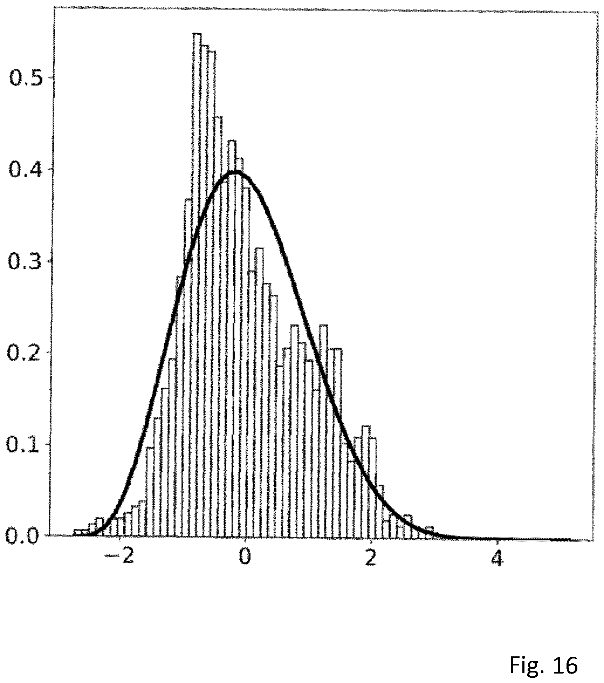

Fig. 16 zeigt nun analog zu der Darstellung in Fig. 1 eine statistische Verteilung, präziser gesagt eine Verteilungsdichtefunktion, die auf die oben beschriebene Weise ermittelt wurde, die somit in der Lösungsmenge der geeigneten statistischen Verteilungen liegt und die daher geeignet ist, die Messdaten-Werte der Stichprobe über das gesamte vorgegebene Werteintervall statistisch zu modellieren. In Fig. 16 ist dies daraus erkennbar, dass im Gegensatz zu Fig. 1 die durch die ununterbrochene Linie dargestellte Verteilungsdichtefunktion auch im Bereich der Messdaten-Werte kleiner als -1,9 positive Häufigkeitswerte bzw. Wahrscheinlichkeitswerte annimmt.

Im Fall der Vorbereitung der Auswertung einer Stichprobe von Messdaten können zum Beispiel lediglich die Verfahrensschritte der Definition der Menge aller derjenigen statistischen Verteilungen, welche dazu in der Lage sind, eine Häufigkeit von Messdaten-Werten in dem gesamten Werteintervall zu beschreiben, und der Ermittlung der zu der Menge zugehörigen statistischen Verteilung ausgeführt werden. Dies schließt selbstverständlich nicht aus, dass nach der Ermittlung der statistischen Verteilung eine Auswertung einer Stichprobe von Messdaten mittels dieser statistischen Verteilung stattfindet.

**Patentansprüche**

1. Auf einem Computer oder Computernetzwerk durch ein Computerprogramm ausgeführtes Verfahren zum Auswerten einer Stichprobe von Messdaten aus einer Vermessung einer Vielzahl von Werkstücken durch ein oder mehrere Koordinatenmessgeräte, wobei

- aus einem existierenden oder bei Ausführung des Verfahrens aufgestellten System von statistischen Verteilungen nach Pearson zur Beschreibung einer Häufigkeit von Messdaten-Werten als Funktion der Messdaten-Werte, wobei die Verteilungen des Systems durch jeweils einen Momenten-Wert von zwei Momenten, nämlich einer Schiefe und einer Kurtosis, der jeweiligen statistischen Verteilung beschreibbar sind, eine Menge aller derjenigen statistischen Verteilungen definiert wird, welche dazu in der Lage sind, eine Häufigkeit von Messdaten-Werten in dem gesamten Werteintervall der Stichprobe zu beschreiben, wobei durch Auswertung der Stichprobe Verteilungen aus dem System erkannt werden, die nicht dazu in der Lage sind, die Häufigkeit von Messdaten-Werten in dem gesamten Werteintervall der Stichprobe zu beschreiben,

- aus der Stichprobe von Messdaten entsprechend einer ersten statistischen Verteilung jeweils ein Momenten-Wert der Schiefe und der Kurtosis ermittelt wird,

- anhand der ermittelten Momenten-Werte geprüft wird, ob in der definierten Menge eine statistische Verteilung existiert, die die ermittelten Momenten-Werte der Schiefe und der Kurtosis aufweist, und ein entsprechendes Prüfergebnis erzeugt wird, nämlich dass in der definierten Menge entweder keine solche statistische Verteilung existiert oder eine solche statistische Verteilung existiert,

- eine statistische Verteilung erhalten wird, die eine solche existierende statistische Verteilung ist oder, wenn in der definierten Menge keine solche statistische Verteilung existiert, für die Stichprobe eine zweite statistische Verteilung ermittelt und erhalten wird, die eine in der definierten Menge enthaltene statistische Verteilung ist, und

- anhand der erhaltenen statistischen Verteilung festgestellt wird, ob ein Prozess, in dem die vermessenen Werkstücke hergestellt und/oder bearbeitet worden sind, beherrschbar ist und/oder ob ein vorgegebenes Qualitätskriterium für den Prozess in Bezug auf die Häufigkeitsverteilung der Messdaten-Werte der Stichprobe erfüllt ist oder nicht erfüllt ist.

2. Verfahren nach Anspruch 1, wobei für jeweils zwei statistische Verteilungen, die dazu in der Lage sind, eine Häufigkeit von Messdaten-Werten als Funktion der Messdaten-Werte zu beschreiben, ein Abstandsmaß definiert ist oder definiert wird, das einen Abstand der zwei statistischen Verteilungen beschreibt, und wobei der Wert des Abstandsmaßes der ersten statistischen Verteilung oder einer der ersten statistischen Verteilung in dem System von statistischen Verteilungen entsprechenden Verteilung zu der zweiten statistischen Verteilung ein Minimum des Abstandsmaßes des Abstandes der ersten statistischen Verteilung oder der entsprechenden Verteilung zu den statistischen Verteilungen in der definierten Menge ist.

3. Verfahren nach Anspruch 1 oder 2, wobei bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall eine Grenze der Menge ermittelt wird.

4. Verfahren nach Anspruch 1, 2 oder 3, wobei bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall Wertepaare der Schiefe und der Kurtosis von statistischen Verteilungen des Systems ermittelt werden, die der Menge entsprechen.

5. Verfahren nach Anspruch 3 und nach Anspruch 4, wobei bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall eine Grenzkurve in einer von der Schiefe und der Kurtosis von statistischen Verteilungen des Systems aufgespannten Ebene ermittelt wird.

6. Verfahren nach einem der Ansprüche 1 bis 5, wobei die zweite statistische Verteilung unter Befolgung einer vorgegebenen Vorschrift für die ermittelten Momenten-Werte der Schiefe und der Kurtosis ermittelt wird und wobei die zweite statistische Verteilung auf eindeutige Weise aus den ermittelten Momenten-Werten der Schiefe und der Kurtosis folgt und andere Momenten-Werte der Schiefe und der Kurtosis hat.

7. Verfahren nach einem der Ansprüche 1 bis 6, wobei die Messdaten jeweils Koordinaten zumindest eines Teils einer Werkstückoberfläche und/oder eines Werkstückinneren sind oder aus zumindest einer Koordinate des jeweiligen Werkstücks abgeleitete Messdaten sind.

8. Anordnung zum Auswerten einer Stichprobe von Messdaten aus einer Vermessung einer Vielzahl von Werkstücken durch ein oder mehrere Koordinatenmessgeräte, wobei die Anordnung aufweist:

- eine Definitionseinrichtung (5), die ausgestaltet ist aus einem System von statistischen Verteilungen nach Pearson zur Beschreibung einer Häufigkeit von Messdaten-Werten als Funktion der Messdaten-Werte, wobei die Verteilungen des Systems durch jeweils einen Momenten-Wert von zwei Momenten, nämlich einer Schiefe und einer Kurtosis, der jeweiligen statistischen Verteilung beschreibbar sind, eine Menge aller derjenigen statistischen Verteilungen zu definieren, welche dazu in der Lage sind, eine Häufigkeit von Messdaten-Werten in dem gesamten Werteintervall der Stichprobe zu beschreiben, wobei durch Auswertung der Stichprobe Verteilungen aus dem System erkannt werden, die nicht dazu in der Lage sind, die Häufigkeit von Messdaten-Werten in dem gesamten Werteintervall der Stichprobe zu beschreiben,

- eine Momenten-Ermittlungseinrichtung (7), die ausgestaltet ist, aus der Stichprobe von Messdaten entsprechend einer ersten statistischen Verteilung jeweils einen Momenten-Wert der Schiefe und der Kurtosis zu ermitteln,

- eine Prüfeinrichtung (9), die ausgestaltet ist, anhand der ermittelten Momenten-Werte zu prüfen, ob in der definierten Menge eine statistische Verteilung existiert, die die ermittelten Momenten-Werte der Schiefe und der Kurtosis aufweist, und ein entsprechendes Prüfergebnis zu erzeugen, nämlich dass entweder keine solche statistische Verteilung existiert oder eine solche statistische Verteilung existiert,

- eine Verteilungs-Ermittlungseinrichtung (11), die ausgestaltet ist, für die Stichprobe eine zweite statistische Verteilung zu ermitteln, wenn keine solche statistische Verteilung existiert, wobei die zweite statistische Verteilung eine in der definierten Menge enthaltene statistische Verteilung ist,

wobei die Anordnung ausgestaltet ist, eine statistische Verteilung zu erhalten, die eine solche existierende statistische Verteilung in der definierten Menge ist oder, wenn keine solche statistische Verteilung in der definierten Menge existiert, die die zweite, in der definierten Menge enthaltene statistische Verteilung ist, und anhand der erhaltenen statistischen Verteilung festzustellen, ob ein Prozess, in dem die vermessenen Werkstücke hergestellt und/oder bearbeitet worden sind, beherrschbar ist und/oder ob ein vorgegebenes Qualitätskriterium für den Prozess in Bezug auf die Häufigkeitsverteilung der Messdaten-Werte der Stichprobe erfüllt ist oder nicht erfüllt ist.

9. Anordnung nach Anspruch 8, wobei die Verteilungs-Ermittlungseinrichtung (11) ausgestaltet ist, die zweite statistische Verteilung derart aus der definierten Menge zu ermitteln, dass auf Grundlage eines für jeweils zwei statistische Verteilungen definierten Abstandsmaßes der Wert des Abstandsmaßes der ersten statistischen Verteilung oder einer der ersten statistischen Verteilung in dem System von statistischen Verteilungen entsprechenden Verteilung zu der zweiten statistischen Verteilung ein Minimum des Abstandsmaßes des Abstandes der ersten statistischen Verteilung oder der entsprechenden Verteilung zu den statistischen Verteilungen in der definierten Menge ist, wobei das Abstandsmaß einen Abstand von jeweils zwei statistischen Verteilungen beschreibt, die dazu in der Lage sind, eine Häufigkeit von Messdaten-Werten als Funktion der Messdaten-Werte zu beschreiben.

10. Anordnung nach Anspruch 8 oder 9, wobei die Definitionseinrichtung (5) ausgestaltet ist, bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall eine Grenze der Menge zu ermitteln.

11. Anordnung nach Anspruch 8, 9 oder 10, wobei die Definitionseinrichtung (5) ausgestaltet ist, bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall Wertepaare der Schiefe und der Kurtosis von statistischen Verteilungen des Systems zu ermitteln, die der Menge entsprechen.

12. Anordnung nach Anspruch 10 und nach Anspruch 11, wobei die Definitionseinrichtung (5) ausgestaltet ist, bei der Definition der Menge aller derjenigen statistischen Verteilungen, welche dazu in der Lage sind, eine Häufigkeit von Messdaten-Werten in dem gesamten Werteintervall der Stichprobe zu beschreiben, aus dem Werteintervall eine Grenzkurve in einer von der Schiefe und der Kurtosis von statistischen Verteilungen des Systems aufgespannten Ebene zu ermitteln.

13. Anordnung nach einem der Ansprüche 8 bis 12, wobei die Anordnung ausgestaltet ist, die zweite statistische Verteilung unter Befolgung einer vorgegebenen Vorschrift für die ermittelten Momenten-Werte der Schiefe und der Kurtosis zu ermitteln, wobei die zweite statistische Verteilung auf eindeutige Weise aus den ermittelten Momenten-Werten der Schiefe und der Kurtosis folgt und andere Momenten-Werte der Schiefe und der Kurtosis hat.

14. Anordnung nach einem der Ansprüche 8 bis 13, wobei die Messdaten jeweils Koordinaten zumindest eines Teils einer Werkstückoberfläche und/oder eines Werkstückinneren sind oder aus zumindest einer Koordinate des jeweiligen Werkstücks abgeleitete Messdaten sind.

**15.** Computerprogramm zur Ausführung des Verfahrens nach einem der Ansprüche 1 bis 7.


**Claims**

**1.** Method executed by a computer program on a computer or computer network, for evaluating a sample of measurement data from measuring a multiplicity of workpieces by one or more coordinate measuring machines, wherein

- a set of all those statistical distributions that are able to describe a frequency of measurement data values in the entire value interval of the sample is defined from a system of Pearson-type statistical distributions for describing a frequency of measurement data values as a function of the measurement data values, wherein the distributions of the system are in each case describable by a moment value of two moments, specifically a skewness and a kurtosis, of the respective statistical distribution, said system being in existence or set up upon execution of the method, wherein evaluation of the sample identifies distributions of the system which are unable to describe the frequency of measurement data values in the entire value interval of the sample,
- a respective moment value of the skewness and the kurtosis is ascertained from the sample of measurement data corresponding to a first statistical distribution,
- the ascertained moment values are used to check whether the defined set contains a statistical distribution which has the ascertained moment values of the skewness and the kurtosis, and a corresponding test result is produced, specifically that either no such statistical distribution exists in the defined set or such a statistical distribution exists in said defined set,
- a statistical distribution which is such an existing statistical distribution is obtained or, if no such statistical distribution exists in the defined set, a second statistical distribution is ascertained and obtained for the sample, and this second statistical distribution is a statistical distribution contained in the defined set, and
- on the basis of the statistical distribution obtained, it is determined whether a process in which the measured workpieces were produced and/or processed can be controlled and/or whether a specified quality criterion for the process with regard to the frequency distribution of the measurement data values of the sample is fulfilled or not.

**2.** Method according to Claim 1, wherein a measure of distance has been or is defined for two statistical distributions in each case, which are able to describe a frequency of measurement data values as a function of the measurement data values, said measure of distance describing a distance between the two statistical distributions, and wherein the value of the measure of distance of the first statistical distribution or a distribution corresponding to the first statistical distribution in the system of statistical distributions from the second statistical distribution is a minimum of the measure of distance of the distance of the first statistical distribution or the corresponding distribution from the statistical distributions in the defined set.

**3.** Method according to Claim 1 or 2, wherein a boundary of the set is ascertained from the value interval when defining the set of all those statistical distributions that are able to describe a frequency of measurement data values in the entire value interval of the sample.

**4.** Method according to Claim 1, 2 or 3, wherein value pairs of the skewness and the kurtosis of statistical distributions of the system, which correspond to the set, are ascertained from the value interval when defining the set of all those statistical distributions that are able to describe a frequency of measurement data values in the entire value interval of the sample.

**5.** Method according to Claim 3 and according to Claim 4, wherein a boundary curve in a plane spanned by the skewness and the kurtosis of statistical distributions of the system is ascertained from the value interval when defining the set of all those statistical distributions that are able to describe a frequency of measurement data values in the entire value interval of the sample.

**6.** Method according to any of Claims 1 to 5, wherein the second statistical distribution is ascertained by following a specified rule for the ascertained moment values of the skewness and the kurtosis and wherein the second statistical distribution follows uniquely from the ascertained moment values of the skewness and the kurtosis and has different moment values of the skewness and the kurtosis.

**7.** Method according to any of Claims 1 to 6, wherein the measurement data in each case are coordinates of at least some of a workpiece surface and/or of a workpiece interior or are measurement data derived from at least one coordinate of the respective workpiece.

8. Arrangement for evaluating a sample of measurement data from measuring a multiplicity of workpieces by one or more coordinate measuring machines, wherein the arrangement comprises:

- a definition device (5) configured to define a set of all those statistical distributions that are able to describe a frequency of measurement data values in the entire value interval of the sample from a system of Pearson-type statistical distributions for describing a frequency of measurement data values as a function of the measurement data values, wherein the distributions of the system are in each case describable by a moment value of two moments, specifically a skewness and a kurtosis, of the respective statistical distribution, wherein evaluation of the sample identifies distributions of the system which are unable to describe the frequency of measurement data values in the entire value interval of the sample,
- a moment ascertainment device (7) configured to ascertain a respective moment value of the skewness and the kurtosis from the sample of measurement data corresponding to a first statistical distribution,
- a checking device (9) configured to use the ascertained moment values to check whether the defined set contains a statistical distribution which has the ascertained moment values of the skewness and the kurtosis, and to produce a corresponding test result, specifically that either no such statistical distribution exists or such a statistical distribution exists,
- a distribution ascertainment device (11) which is configured to ascertain a second statistical distribution for the sample if no such statistical distribution exists, wherein the second statistical distribution is a statistical distribution contained in the defined set,

wherein the arrangement is configured to obtain a statistical distribution which is such an existing statistical distribution in the defined set or, if no such statistical distribution exists in the defined set, which is the second statistical distribution contained in the defined set, and to determine, on the basis of the statistical distribution obtained, whether a process in which the measured workpieces were produced and/or processed can be controlled and/or whether a specified quality criterion for the process with regard to the frequency distribution of the measurement data values of the sample is fulfilled or not.

9. Arrangement according to Claim 8, wherein the distribution ascertainment device (11) is configured to ascertain the second statistical distribution from the defined set in such a way that, on the basis of a measure of distance defined for two statistical distributions in each case, the value of the measure of distance of the first statistical distribution or a distribution corresponding to the first statistical distribution in the system of statistical distributions from the second statistical distribution is a minimum of the measure of distance of the distance of the first statistical distribution or the corresponding distribution from the statistical distributions in the defined set, the measure of distance describing a distance between two statistical distributions in each case, which are able to describe a frequency of measurement data values as a function of the measurement data values.

10. Arrangement according to Claim 8 or 9, wherein the definition device (5) is configured to ascertain a boundary of the set from the value interval when defining the set of all those statistical distributions that are able to describe a frequency of measurement data values in the entire value interval of the sample.

11. Arrangement according to Claim 8, 9 or 10, wherein the definition device (5) is configured to ascertain value pairs of the skewness and the kurtosis of statistical distributions of the system, which correspond to the set, from the value interval when defining the set of all those statistical distributions that are able to describe a frequency of measurement data values in the entire value interval of the sample.

12. Arrangement according to Claim 10 and according to Claim 11, wherein the definition device (5) is configured to ascertain a boundary curve in a plane spanned by the skewness and the kurtosis of statistical distributions of the system from the value interval when defining the set of all those statistical distributions that are able to describe a frequency of measurement data values in the entire value interval of the sample.

13. Arrangement according to any of Claims 8 to 12, wherein the arrangement is configured to ascertain the second statistical distribution by following a specified rule for the ascertained moment values of the skewness and the kurtosis, wherein the second statistical distribution follows uniquely from the ascertained moment values of the skewness and the kurtosis and has different moment values of the skewness and the kurtosis.

14. Arrangement according to any of Claims 8 to 13, wherein the measurement data in each case are coordinates of at least some of a workpiece surface and/or of a workpiece interior or are measurement data derived from at least one coordinate of the respective workpiece.

**15.** Computer program for carrying out the method according to any of Claims 1 to 7.

**Revendications**

**1.** Procédé mis en œuvre sur un ordinateur ou un réseau informatique par un programme informatique, destiné à analyser un échantillon de données de mesure issues d'un mesurage d'une pluralité de pièces ouvrées par un ou plusieurs appareils de mesure de coordonnées,

- à partir d'un système existant, ou installé lors de la mise en œuvre du procédé, de distributions statistiques selon Pearson pour décrire une fréquence de valeurs de données de mesure en fonction des valeurs de données de mesure, les distributions du système pouvant être décrites respectivement par une valeur de moment de deux moments, à savoir une dissymétrie et un kurtosis, de la distribution statistique respective, un ensemble étant défini de toutes les distributions statistiques qui sont capables de décrire une fréquence de valeurs de données de mesure dans l'intervalle de valeurs complet de l'échantillon, les distributions du système qui ne sont pas capables de décrire la fréquence de valeurs de données de mesure dans l'intervalle de valeurs complet de l'échantillon étant reconnues par analyse de l'échantillon,
- une valeur de moment de la dissymétrie et du kurtosis étant respectivement déterminée à partir de l'échantillon de données de mesure conformément à une première distribution statistique,
- un contrôle étant effectué, à l'aide des valeurs de moment déterminées, pour vérifier s'il existe dans l'ensemble défini une distribution statistique qui présente les valeurs de moment déterminées de la dissymétrie et du kurtosis, et un résultat de vérification correspondant étant généré, à savoir soit qu'il n'existe pas de telle distribution statistique, soit qu'une telle distribution statistique existe dans l'ensemble défini,
- une distribution statistique étant obtenue, laquelle correspond à une telle distribution statistique existante ou, si une telle distribution statistique n'existe pas dans l'ensemble défini, une deuxième distribution statistique étant déterminée et obtenue pour l'échantillon, laquelle est une distribution statistique contenue dans l'ensemble défini, et
- une constatation étant effectuée à l'aide de la distribution statistique obtenue, afin de déterminer si un processus dans lequel les pièces ouvrées mesurées ont été fabriquées et/ou usinées peut être maîtrisé et/ou si un critère de qualité prédéfini pour le processus en relation avec la distribution de fréquence des valeurs des données de mesure de l'échantillon est satisfait ou non.

**2.** Procédé selon la revendication 1, pour respectivement deux distributions statistiques qui sont capables de décrire une fréquence de valeurs de données de mesure en fonction des valeurs de données de mesure, une cote d'écart qui décrit un écart entre les deux distributions statistiques est définie ou sera définie, et la valeur de la cote d'écart de la première distribution statistique ou d'une distribution correspondant à la première distribution statistique dans le système de distributions statistiques par rapport à la deuxième distribution statistique est un minimum de la cote d'écart de l'écart entre la première distribution statistique ou la distribution correspondante et les distributions statistiques dans l'ensemble défini.

**3.** Procédé selon la revendication 1 ou 2, lors de la définition de l'ensemble de toutes les distributions statistiques qui sont capables de décrire une fréquence de valeurs de données de mesure dans l'intervalle de valeurs complet de l'échantillon, une limite de l'ensemble étant déterminée à partir de l'intervalle de valeurs.

**4.** Procédé selon la revendication 1, 2 ou 3, lors de la définition de l'ensemble de toutes les distributions statistiques qui sont capables de décrire une fréquence de valeurs de données de mesure dans l'intervalle de valeurs complet de l'échantillon, des paires de valeurs de la dissymétrie et du kurtosis des distributions statistiques du système qui correspondent à l'ensemble sont déterminées à partir de l'intervalle de valeurs.

**5.** Procédé selon la revendication 3 et selon la revendication 4, lors de la définition de l'ensemble de toutes les distributions statistiques qui sont capables de décrire une fréquence de valeurs de données de mesure dans l'intervalle de valeurs complet de l'échantillon, une courbe limite est déterminée à partir de l'intervalle de valeurs dans un plan parcouru par la dissymétrie et le kurtosis des distributions statistiques du système.

**6.** Procédé selon l'une des revendications 1 à 5, la deuxième distribution statistique étant déterminée en suivant une règle prédéfinie pour les valeurs de moment déterminées de la dissymétrie et du kurtosis, et la deuxième distribution statistique découlant univoquement des valeurs de moment déterminées de la dissymétrie et du kurtosis et ayant d'autres valeurs de moment de la dissymétrie et du kurtosis.

**7.** Procédé selon l'une des revendications 1 à 6, les données de mesure étant respectivement des coordonnées d'au moins une partie d'une surface de pièce ouvrée et/ou d'un espace intérieur de pièce ouvrée ou étant des données de mesure dérivées d'au moins une coordonnée de la pièce ouvrée respective.

**8.** Arrangement pour l'analyse d'un échantillon de données de mesure issues d'un mesurage d'une pluralité de pièces ouvrées par une ou plusieurs machines de mesure de coordonnées, l'arrangement possédant :

- un dispositif de définition (5), qui est configuré pour, à partir d'un système de distributions statistiques selon Pearson pour décrire une fréquence de valeurs de données de mesure en fonction des valeurs de données de mesure, les distributions du système pouvant être décrites respectivement par une valeur de moment de deux moments, à savoir une dissymétrie et un kurtosis, de la distribution statistique respective, définir un ensemble de toutes les distributions statistiques qui sont capables de décrire une fréquence de valeurs de données de mesure dans l'intervalle de valeurs complet de l'échantillon, les distributions du système qui ne sont pas capables de décrire la fréquence de valeurs de données de mesure dans l'intervalle de valeurs complet de l'échantillon étant reconnues par analyse de l'échantillon,
- un dispositif de détermination de moment (7), qui est configuré pour déterminer respectivement une valeur de moment de la dissymétrie et du kurtosis à partir de l'échantillon de données de mesure conformément à une première distribution statistique,
- un dispositif de contrôle (9), qui est configuré pour contrôler, à l'aide des valeurs de moment déterminées, s'il existe dans l'ensemble défini une distribution statistique qui présente les valeurs de moment déterminées de la dissymétrie et du kurtosis, et générer un résultat de vérification correspondant, à savoir soit qu'il n'existe pas de telle distribution statistique, soit qu'une telle distribution statistique existe,
- un dispositif de détermination de distribution (11), qui est configuré pour déterminer une deuxième distribution statistique pour l'échantillon si une telle distribution statistique n'existe pas, la deuxième distribution statistique étant une distribution statistique contenue dans l'ensemble défini,

l'arrangement étant configuré pour obtenir une distribution statistique qui est une telle distribution statistique existante dans l'ensemble défini ou, si une telle distribution statistique n'existe pas dans l'ensemble défini, qui est la deuxième distribution statistique contenue dans l'ensemble défini, et pour constater, à l'aide de la distribution statistique obtenue, si un processus dans lequel les pièces ouvrées mesurées ont été fabriquées et/ou traitées peut être maîtrisé et/ou si un critère de qualité prédéfini pour le processus en relation avec la distribution de fréquence des valeurs de données de mesure de l'échantillon est satisfait ou non satisfait.

**9.** Arrangement selon la revendication 8, le dispositif de détermination de distribution (11) étant configuré pour déterminer la deuxième distribution statistique à partir de l'ensemble défini de telle sorte que, sur la base d'une cote d'écart définie respectivement pour deux distributions statistiques, la valeur de la cote d'écart de la première distribution statistique ou d'une distribution correspondant à la première distribution statistique dans le système de distributions statistiques par rapport à la deuxième distribution statistique est un minimum de la cote d'écart de l'écart entre la première distribution statistique ou la distribution correspondante et les distributions statistiques dans l'ensemble défini, la cote d'écart décrivant un écart respectivement entre deux distributions statistiques qui sont capables de décrire une fréquence de valeurs de données de mesure en fonction des valeurs de données de mesure.

**10.** Arrangement selon la revendication 8 ou 9, le dispositif de définition (5) étant configuré pour, lors de la définition de l'ensemble de toutes les distributions statistiques qui sont capables de décrire une fréquence de valeurs de données de mesure dans l'intervalle de valeurs complet de l'échantillon, déterminer une limite de l'ensemble à partir de l'intervalle de valeurs.

**11.** Arrangement selon la revendication 8, 9 ou 10, le dispositif de définition (5) étant configuré pour, lors de la définition de l'ensemble de toutes les distributions statistiques qui sont capables de décrire une fréquence de valeurs de données de mesure dans l'intervalle de valeurs complet de l'échantillon, déterminer des paires de valeurs de la dissymétrie et du kurtosis des distributions statistiques du système qui correspondent à l'ensemble à partir de l'intervalle de valeurs.

**12.** Arrangement selon la revendication 10 et selon la revendication 11, le dispositif de définition (5) étant configuré pour, lors de la définition de l'ensemble de toutes les distributions statistiques qui sont capables de décrire une fréquence de valeurs de données de mesure dans l'intervalle de valeurs complet de l'échantillon, déterminer une courbe limite à partir de l'intervalle de valeurs dans un plan parcouru par la dissymétrie et le kurtosis des distributions statistiques du système.

**13.** Arrangement selon l'une des revendications 8 à 12, l'arrangement étant configuré pour déterminer la deuxième distribution statistique en suivant une règle prédéfinie pour les valeurs de moment déterminées de la dissymétrie et du kurtosis, la deuxième distribution statistique découlant univoquement des valeurs de moment déterminées de la dissymétrie et du kurtosis et ayant d'autres valeurs de moment de la dissymétrie et du kurtosis.

**14.** Arrangement selon l'une des revendications 8 à 13, les données de mesure étant respectivement des coordonnées d'au moins une partie d'une surface de pièce ouvrée et/ou d'un espace intérieur de pièce ouvrée ou étant des données de mesure dérivées d'au moins une coordonnée de la pièce ouvrée respective.

**15.** Programme informatique pour la mise en œuvre du procédé selon l'une des revendications 1 à 7.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9942811 A1
- US 2016225389 A1
- CN 107220216 A

**In der Beschreibung aufgeführte Nicht-Patentliteratur**

- **T. SEGRETO et al.** Feature Extraction and Pattern Recognition in Acoustic Emission Monitoring of Robot Assisted Polishing. *PROCEDIA CIRP*, 01 December 2015, vol. 28, 22-27